# EUROPEAN PATENT APPLICATION

(11) **EP 3 505 289 A1**
(43) Date of publication of application: **03.07.2019**
(21) Application number: 16915234.5
(22) Date of filing: 06.10.2016
(51) Int. Cl.: B23K 9/23, B23K 9/007, B23K 9/167, B23K 9/173, B23K 10/02

(54) **ARC-SPOT WELDING METHOD FOR JOINING DIFFERENT MATERIALS, JOINING AUXILIARY MEMBER, AND DIFFERENT MATERIALS WELDING JOINT**

(30) Priority: 29.08.2016 JP 2016166838
(71) Applicant: Kabushiki Kaisha Kobe Seiko Sho (Kobe Steel, Ltd.), Kobe-shi, Hyogo 651-8585 (JP)
(72) Inventor: SUZUKI, Reiichi, Kanagawa 251-8551 (JP); MARUYAMA, Tokuji, Kanagawa 251-8551 (JP); KOBAYASHI, Satoru, Kanagawa 251-8551 (JP)
(74) Representative: TBK
(86) International application number: PCT/JP2016/079758
(87) International publication number: WO 2018/042679

(57) **Abstract**

A different materials welding joint (1) is provided with: an upper plate (10) that is made of an aluminum alloy or a magnesium alloy; and a lower plate (20) that is made of steel and is arc-spot welded to the upper plate (10), wherein the upper plate (10) has a hole (11) that faces a surface superposed on the lower plate (20). The different materials welding joint (1) is further provided with a joining auxiliary member (30) which is made of steel, which has a stepped external shape having an insertion part (31) to be inserted into the hole (11) provided to the upper plate (10) and a non-insertion part (32), and in which a hollow part (33) penetrating the insertion part (31) and the non-insertion part (32) is formed. The hollow part (33) of the joining auxiliary member (30) is filled with a welding metal (40) made of an iron alloy or Ni alloy, and a melting part (W) is formed by the welding metal (40), and portions of the lower plate (20) and the joining auxiliary member (30) which have been melted.

## Description

### TECHNICAL FIELD

The present invention relates to an arc spot welding method for dissimilar material joining, a joining assist member, and a dissimilar material welded joint.

### BACKGROUND ART

Transport equipment as typified by automobiles is always required to be increased in drive fuel efficiency for the purpose of suppressing various items such as (a) the consumption of petroleum fuels which are limited resources, (b) CO₂ which is a global warming gas generated with burning, and (c) the running cost. Among means as an improvement measure is vehicle weight reduction as well as improvements in motive force-related technologies such as use of electric driving. One means for weight reduction is to replace steel which is a current main material with light materials such as aluminum alloys, magnesium alloys, carbon fiber, etc. However, replacing all of the materials with such light materials has problems such as cost increase and insufficiency in strength. As a countermeasure against these problems, a design method so called "multi-material" in which a proper combination of steel and a light material are used at each location is now attracting attention.

Combining steel and any of the above-described light materials necessarily results in occurrence of a position where to join these materials. Whereas steel materials, aluminum alloy materials, or magnesium alloy materials can be welded to each other easily, it is known that welding of different materials is very difficult. This is because intermetallic compounds (IMCs) which are very fragile are formed in a melt-mixing portion between steel and aluminum or magnesium and destroyed easily when receiving external stress caused by tension, impact, or the like. As a result, such welding methods as the resistance spot welding method and the arc welding method cannot be used for dissimilar material joining and it is common to use other joining methods. Welding cannot be used for joining of steel and carbon fiber because the latter is not a metal.

Among conventional dissimilar material joining techniques is, for example, a means in which through-holes are formed through both of a steel material and a light material and they are bound together by pressing them against each other from both sides using a bolt and a nut. Another example means is known in which materials are bound together by a swaging effect by inserting a swaging member from one side by applying a strong pressure to it (refer to Patent document 1, for example).

A still another example means is proposed in which a steel joining member is pushed, as a punch, into an aluminum alloy material, whereby a hole is formed and the joining member is bound tentatively. Subsequently, the aluminum alloy material is overlapped with a steel material, the two kinds of members are sandwiched between copper electrodes from both sides, and the steel material and the joining member are resistance-welded to each other by applying pressure and large current to them instantaneously. (Refer to Patent document 2, for example.)

A further example means has been developed in which an aluminum alloy material and a steel material are joined together directly using a friction stir joining tool (refer to Patent document 3, for example).

### Prior Art Documents

### Patent Documents

Patent document 1: JP-A-2002-174219
Patent document 2: JP-A-2009-285678
Patent document 3: Japanese Patent No. 5,044,128

### SUMMARY OF THE INVENTION

### Problems to Be Solved by the Invention

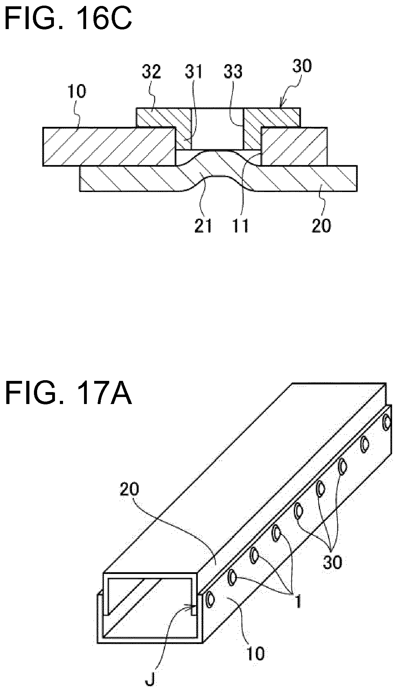

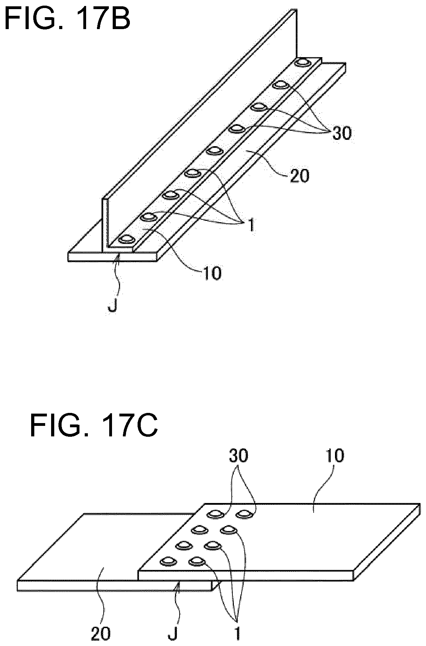

However, the bolt-nut joining method cannot be applied to a case where a steel material and a light material form a structure having a closed cross section (see FIG. 17A) because nuts cannot be inserted. Even in the case of a joint having an open section structure to which this method is applicable (see FIG. 17B and FIG. 17C), another problem of low efficiency arises because screwing nuts into the materials takes time.

Though the joining method disclosed in Patent document 1 is a relatively easy method, it is associated with a problem that the swaging member cannot be inserted in the case where the steel material is high in strength and a problem that high joining strength cannot be obtained because the joining strength depends on the frictional force and the stiffness of the swaging member. There is another problem that this joining method cannot be applied to a closed section structure because it is necessary to press the swaging member by a jig from the front side and the back side in inserting it.

The joining method disclosed in Patent document 2 cannot be applied to a closed section structure, either. And there is another problem that a facility for a resistance welding method is very expensive.

As for the joining method disclosed in Patent document 3, where pressure is applied to the surface of a steel material while an aluminum alloy material is caused to flow plastically in a low temperature range, the two materials do not melt-mix with each other, necessary metallic bonding force can be obtained without formation of intermetallic compounds. There exists a study report stating that joining of steel and carbon fiber is also possible. However, this joining method is associated with problems that it cannot be applied to a closed section structure either, and that it requires a large mechanical facility and hence is expensive because high pressure needs to be generated. Furthermore, resulting joining force is not very strong.

As such, each of the existing dissimilar material joining techniques has one or more of the problems that (i) the materials and the groove shape are restricted to ones suitable for an open section structure, (ii) the joining strength is low, and (iii) the facility cost is high. Thus, to spread multi-material designing that enables combination of various kinds of materials, a new technique is desired that is easy to use and satisfies all of conditions of (i') being applicable to both of an open section structure and a closed section structure, (ii') attaining sufficiently high joining strength and being high in reliability, and (iii') being low in cost.

The present invention has been made in view of the above problems, and an object of the invention is therefore to provide an arc spot welding method for dissimilar material joining, a joining assist member, and a dissimilar material welded joint that make it possible to join different materials, that is, steel and an aluminum alloy (hereinafter also referred to as "Al alloy") or a magnesium alloy (hereinafter also referred to as "Mg alloy"), with quality of being high in strength and reliability using an inexpensive facility already available on the market, and that can be applied to both of an open section structure and a closed section structure with no limitations.

### Means for Solving the Problems

To melt-join steel and an Al alloy or an Mg alloy, formation of intermetallic compounds (IMCs) is unavoidable as mentioned above. On the other hand, it is apparent scientifically and empirically that steel-to-steel welding provides highest joining strength and reliability.

In view of the above, the inventors have conceived a means capable of attaining joining to steel by binding force by using steel-to-steel welding to obtain connection force while not melting an Al alloy or an Mg alloy.

The above object of the invention is thus attained by the constitutions and configurations described below:
(1) An arc spot welding method for dissimilar material joining for joining a first plate made of an aluminum alloy or a magnesium alloy and a second plate made of steel, the method including:
   a step of making a hole through the first plate;
   a step of overlapping the first plate with the second plate;
   a step of inserting a joining assist member made of steel into the hole formed in the first plate, the joining assist member having a stepped external shape including an insertion portion and a non-insertion portion and having a hollow portion formed to penetrate through the insertion portion and the non-insertion portion; and
   a step of filling the hollow portion of the joining assist member with a weld metal and welding the second plate and the joining assist member by any method of the following (a) to (e):
      (a) a gas-shielded arc welding method using, as a consumable electrode, a welding wire to provide the weld metal made of an iron alloy or a nickel alloy;
      (b) a non-gas arc welding method using the welding wire as a consumable electrode;
      (c) a gas tungsten arc welding method using the welding wire as a non-consumable electrode filler;
      (d) a plasma arc welding method using the welding wire as a non-consumable electrode filler; and
      (e) a coated arc welding method using, as a consumable electrode, a coated arc welding rod to provide the weld metal made of an iron alloy or a nickel alloy.
(2) The arc spot welding method for dissimilar material joining according to (1), wherein the second plate has a swell portion formed by drawing, and the swell portion of the second plate is placed in the hole of the first plate in the overlapping step.
(3) The arc spot welding method for dissimilar material joining according to (1), further including, before the overlapping step, a step of applying an adhesive to at least one of overlapped surfaces of the first plate and the second plate around the hole over its entire circumference.
(4) The arc spot welding method for dissimilar material joining according to (1), wherein in the inserting step, an adhesive is applied to at least one of confronting surfaces between the non-insertion portion of the joining assist member and the first plate opposed to the non-insertion portion.
(5) The arc spot welding method for dissimilar material joining according to (1), wherein in the inserting step or after the filling and welding step, an adhesive is applied to a boundary between the non-insertion portion of the joining assist member and a surface of the first plate.
(6) The arc spot welding method for dissimilar material joining according to (1), wherein the insertion portion of the joining assist member has a height P_{H1} of 10% or larger and 100% or smaller of a thickness B_{H} of the first plate..
(7) The arc spot welding method for dissimilar material joining according to (1), wherein the insertion portion of the joining assist member has a diameter P_{D1} of 80% or larger and 105% or smaller of a diameter B_{D} of the hole of the first plate.
(8) The arc spot welding method for dissimilar material joining according to (1), wherein the non-insertion portion of the joining assist member has a diameter P_{D2} of 105% or larger of a diameter B_{D} of the hole of the first plate.
(9) The arc spot welding method for dissimilar material joining according to (1), wherein the non-insertion portion of the joining assist member has a height P_{H2} of 50% or larger and 150% or smaller of a thickness B_{H} of the first plate.
(10) The arc spot welding method for dissimilar material joining according to (1), wherein in the filling and welding step, an excess weld metal is formed on a surface of the joining assist member and the excess weld metal has a diameter W_{D} of 105% or larger of a diameter Ps of the hollow portion of the joining assist member.
(11) A joining assist member to be used for the arc spot welding method for dissimilar material joining according to any one of (1) to (10), the joining assist member being made of steel, having a stepped external shape including an insertion portion and a non-insertion portion, and having a hollow portion formed to penetrate through the insertion portion and the non-insertion portion.
(12) A dissimilar material welded joint including a first plate made of an aluminum alloy or a magnesium alloy and a second plate made of steel and arc-spot-welded to the first plate,
   wherein the first plate has a hole that reaches an overlapped surface to the second plate,
   the dissimilar material welded joint further includes a joining assist member made of steel, the joining assist member having a stepped external shape including an insertion portion inserted in the hole formed in the first plate and a non-insertion portion, and having a hollow portion formed to penetrate through the insertion portion and the non-insertion portion, and
   the hollow portion of the joining assist member is filled with a weld metal made of an iron alloy or a nickel alloy, and a melting portion is formed of the weld metal and a part of melted portions of the second plate and the joining assist member.
(13) The dissimilar material welded joint according to (12), wherein a swell portion formed in the second plate is placed in the hole of the first plate.
(14) The dissimilar material welded joint according to (12), including an adhesive applied to at least one of confronting surfaces of the first plate and the second plate around the hole over its entire circumference.
(15) The dissimilar material welded joint according to (12), including an adhesive applied to at least one of confronting surfaces between the non-insertion portion of the joining assist member and the first plate opposed to the non-insertion portion.
(16) The dissimilar material welded joint according to (12), including an adhesive applied to a boundary between the non-insertion portion of the joining assist member and a surface of the first plate.
(17) The dissimilar material welded joint according to (12), wherein the insertion portion of the joining assist member has a height P_{H1} of 10% or larger and 100% or smaller of a thickness B_{H} of the first plate.
(18) The dissimilar material welded joint according to (12), wherein the insertion portion of the joining assist member has a diameter P_{D1} of 80% or larger and 105% or smaller of a diameter B_{D} of the hole of the first plate.
(19) The dissimilar material welded joint according to (12), wherein the non-insertion portion of the joining assist member has a diameter P_{D2} of 105% or larger of a diameter B_{D} of the hole of the first plate.
(20) The dissimilar material welded joint according to (12), wherein the non-insertion portion of the joining assist member has a height P_{H2} of 50% or larger and 150% or smaller of a sheet thickness B_{H} of the first plate.
(21) The dissimilar material welded joint according to (12), wherein an excess weld metal is formed on a surface of the joining assist member and the excess weld metal has a diameter W_{D} of 105% or larger of a diameter Ps of the hollow portion of the joining assist member.

### Advantages of the Invention

The invention makes it possible to join different materials, that is, steel and an aluminum alloy or a magnesium alloy, with quality of being high in strength and reliability using an inexpensive arc welding facility and enables application to both of an open section structure and a closed section structure with no limitations.

### BRIEF DESCRIPTION OF THE DRAWINGS

FIG. 1A is a perspective view of a dissimilar material welded joint according to an embodiment of the present invention.
FIG. 1B is a sectional view of the dissimilar material welded joint taken along line I-I in FIG. 1A.
FIG. 2A] FIG. 2A shows boring work of an arc spot welding method for dissimilar material joining according to the embodiment.
FIG. 2B] FIG. 2B shows overlapping work of the arc spot welding method for dissimilar material joining according to the embodiment.
FIG. 2C shows insertion work of the arc spot welding method for dissimilar material joining according to the embodiment.
FIG. 2D shows welding work of the arc spot welding method for dissimilar material joining according to the embodiment.
FIG. 3A shows a first step of an example of boring work.
FIG. 3B shows a second step of the example of boring work.
FIG. 3C shows a third step of the example of boring work.
FIG. 3D shows a fourth step of the example of boring work.
FIG. 4A is a sectional view of a dissimilar material welded joint for description of weld penetration of a weld metal.
FIG. 4B is a sectional view of a dissimilar material welded joint for description of weld penetration of a weld metal.
FIG. 5A] FIG. 5A is a sectional view of a dissimilar material welded joint showing a state where external forces are acting in width directions to separate a top plate and a bottom plate from each other.
FIG. 5B is a sectional view of a dissimilar material welded joint showing a state where external forces are acting in width directions to separate the top plate and the bottom plate from each other when intermetallic compounds are formed.
FIG. 6 is a sectional view of a dissimilar material welded joint showing a state where external forces are acting in thickness directions to separate the top plate and the bottom plate from each other.
FIG. 7A is a sectional view of the top plate, the bottom plate, and the joining assist member showing a state before arc welding where a gap exists between the top plate and the bottom plate.
FIG. 7B is a sectional view of the dissimilar material welded joint showing a state after the arc welding together with thermal contraction forces.
FIG. 8 is a sectional view of the top plate, the bottom plate, and the joining assist member for description of dimensional relationships of the joining assist member.
FIG. 9A is a perspective view of the top plate and the bottom plate for description of an arc spot welding method for dissimilar material joining according to a first modification.
FIG. 9B is a sectional view of the top plate and the bottom plate for description of the arc spot welding method for dissimilar material joining according to the first modification.
FIG. 10A is a perspective view of the top plate and the bottom plate for description of an arc spot welding method for dissimilar material joining according to a second modification.
FIG. 10B is a sectional view of the top plate and the bottom plate for description of the arc spot welding method for dissimilar material joining according to the second modification.
FIG. 11A is a perspective view of the top plate, the bottom plate, and the joining assist member for description of an arc spot welding method for dissimilar material joining according to a third modification.
FIG. 11B is a sectional view of the top plate, the bottom plate, and the joining assist member for description of the arc spot welding method for dissimilar material joining according to the third modification.
FIG. 12 shows a state where arc welding is being performed in a horizontal posture in the third modification.
FIG. 13A is a perspective view of a dissimilar material welded joint for description of an arc spot welding method for dissimilar material joining according to a fourth modification.
FIG. 13B is a sectional view of the dissimilar material welded joint for description of the arc spot welding method for dissimilar material joining according to the fourth modification.
FIG. 14A is a top view, a side view, and a bottom view of the joining assist member shown in FIG. 1.
FIG. 14B is a top view, a side view, and a bottom view of a joining assist member according to a modification.
FIG. 14C is a top view, a side view, and a bottom view of a joining assist member according to another modification.
FIG. 15 is a sectional view for description of an arc spot welding method for dissimilar material joining and a dissimilar material welded joint according to a fifth modification.
FIG. 16A is a sectional view illustrating a step of overlapping a top plate with a bottom plate having a swell portion formed therein by drawing in the arc spot welding method for dissimilar material joining according to the fifth modification.
FIG. 16B is a sectional view illustrating a step of inserting a joining assist member in the hole of the top plate overlapped with the bottom plate having the swell portion formed by drawing in the arc spot welding method for dissimilar material joining according to the fifth modification.
FIG. 16C is a sectional view illustrating a state where the swell portion of the bottom plate and the swell portion of the joining assist member are placed in the hole of the top plate in the arc spot welding method for dissimilar material joining according to the fifth modification.
FIG. 17A is a perspective view showing a closed section structure to which the dissimilar material welded joint according to the embodiment is applied.
FIG. 17B is a perspective view showing an open section structure formed by an L-shaped plate and a flat plate to which the dissimilar material welded joint according to the embodiment is applied.
FIG. 17C is a perspective view showing an open section structure formed by two flat plates to which the dissimilar material welded joint according to the embodiment is applied.

### MODES FOR CARRYING OUT THE INVENTION

An arc spot welding method for dissimilar material joining, a joining assist member, and a dissimilar material welded joint according to an embodiment of the present invention will be hereinafter described in detail with reference to the drawings.

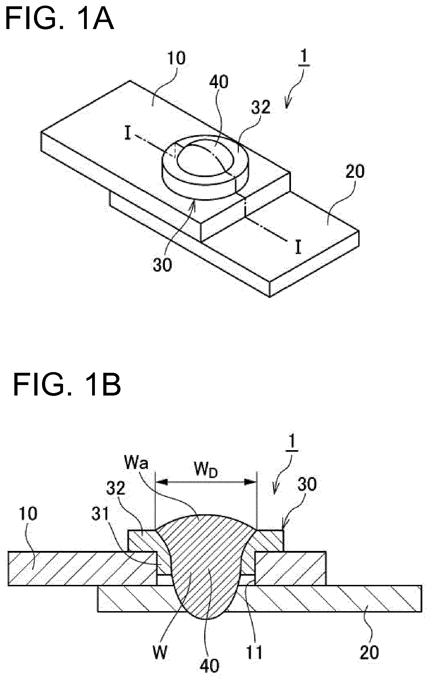

In the arc spot welding method for dissimilar material joining according to the embodiment, a dissimilar material welded joint 1 as shown in FIG. 1A and FIG. 1B is obtained by joining a top plate 10 (first plate) made of an aluminum alloy or a magnesium alloy and a bottom plate 20 (second plate) made of steel that are overlapped with each other, via a joining assist member 30 made of steel, by an arc spot welding method described later.

The top plate 10 has a hole 11 that reaches an overlapped surface to the bottom plate 20 to penetrate in the thickness direction, and the joining assist member 30 is inserted into the hole 11.

The joining assist member 30 has a stepped external shape including an insertion portion 31 to be inserted into the hole 11 of the top plate 10 and a flange-shaped non-insertion portion 32 to be placed on the top surface of the top plate 10. A hollow portion 33 is formed through the joining assist member 30 so as to penetrate through the insertion portion 31 and the non-insertion portion 32. The external shape of the non-insertion portion 32 is not limited to a circle as shown in FIG. 1A and may be any shape. Likewise, the shape of the hollow portion 33 is not limited to a circle and may be any shape.

Furthermore, the hollow portion 33 of the joining assist member 30 is filled with a weld metal 40 of an iron alloy or an Ni alloy provided by melt of a filler material (welding material) by arc spot welding, and a melting portion W is formed of the weld metal 40 and a part of melted portions of the bottom plate 20 and the joining assist member 30.

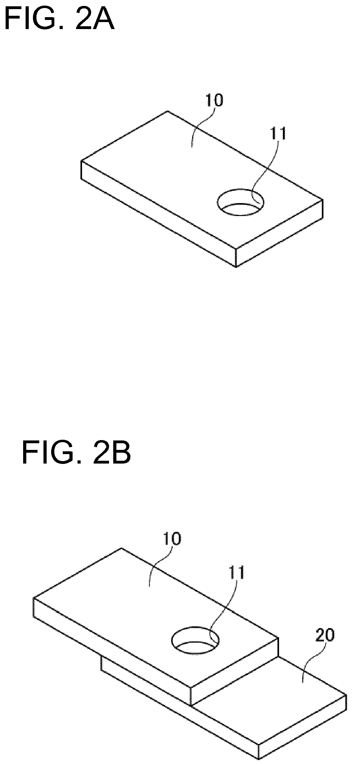

An arc spot welding method for dissimilar material joining for constructing the dissimilar material welded joint 1 will be described below with reference to FIG. 2A to FIG. 2D.

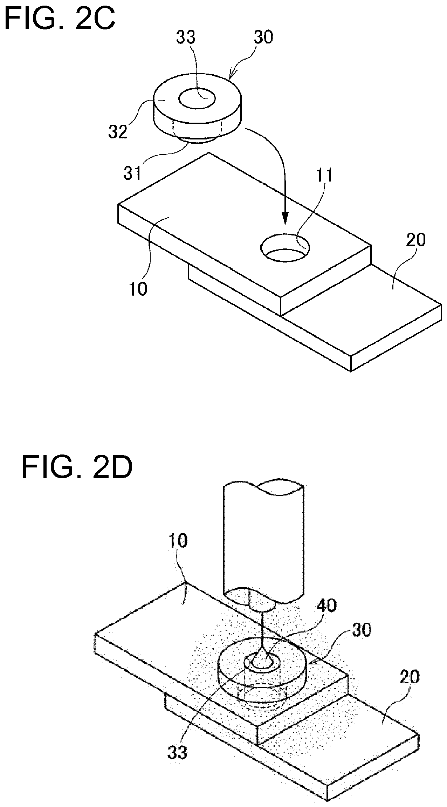

First, as shown in FIG. 2A, boring work for making a hole 11 through the top plate 10 is performed (step S1). Overlapping work of overlapping the top plate 10 and the bottom plate 20 with each other is then performed as shown in FIG. 2B (step S2). Then, as shown in FIG. 2C, the insertion portion 31 of the joining assist member 30 is inserted into the hole 11 of the top plate 10 from the top surface of the top plate 10 (step S3). Subsequently, as shown in FIG. 2D, the top plate 10 and the bottom plate 20 are joined to each other by performing any arc welding work of (a) a consumable-electrode gas-shielded arc welding method, (b) a non-gas arc welding method, (c) a gas tungsten arc welding method, (d) a plasma arc welding method, and (e) a coated arc welding method (step S4). FIG. 2D shows a case where arc welding work is performed by (a) the consumable-electrode gas-shielded arc welding method.

Specific examples of methods for the boring work of step S1 include a) cutting using a rotary tool such as an electric drill or a drilling machine, b) punching with a punch, and c) press punching using a die.

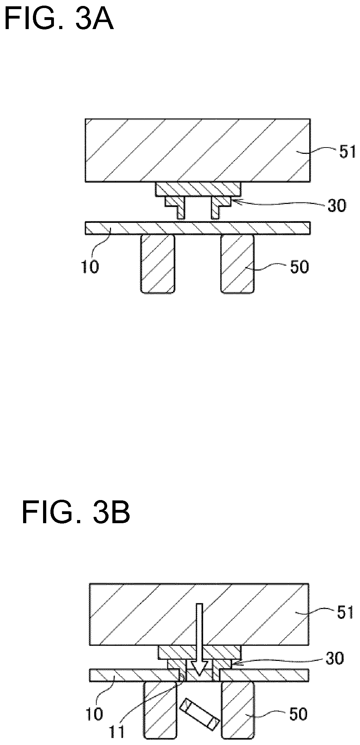

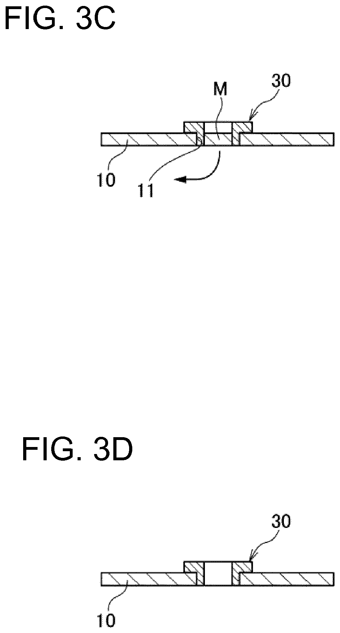

FIG. 3A to FIG. 3D show a special method in which an upper stage 51 on which the joining assist member 30 is fixed is brought close to a lower stage 50 on which the top plate 10 is placed and punching is performed using the joining assist member 30 itself as a punch, whereby boring work of step S1 and joining assist member 30 insertion work of step S3 are performed at the same time. However, a base material piece M may remain in the hollow portion 33 to obstruct arc welding though it is rare. It is therefore necessary to remove the base material piece M.

Thus, when this method is employed, the overlapping work of step S2 and the joining assist member 30 insertion work of step S3 are interchanged in order.

The arc welding work of step S4 is necessary to join the joining assist member 30 and the bottom plate 20 and fill the hollow portion 33 of the joining assist member 30. It is therefore indispensable for the arc welding to insert a filler material (welding material). More specifically, the weld metal 40 is formed by melting the filler material by the following four arc welding methods.
(a) The consumable-electrode gas-shielded arc welding method, which is a welding method commonly called MAG or MIG, is a method in which a good welded portion is formed by using a solid wire or a flux-containing wire as a filler/arc generation consumable electrode and shielding the welded portion from the air by a shielding gas such as CO₂, Ar, or He.
(b) The non-gas arc welding method, which is also called a self-shielded arc welding method, is a means for forming a good welded portion using a special flux-containing wire as a filler/arc generation consumable electrode while dispensing with a shielding gas.
(c) The gas tungsten arc welding method is one kind of gas-shielded arc welding method but is of a non-consumable-electrode type, and is commonly called TIG. An inert gas such as Ar or He is used as a shielding gas. An arc is generated between a tungsten electrode and a base material, and a filler wire is supplied to the arc from the side.
   Whereas in general no current is applied to the filler wire, there exists hot wire TIG in which the melting rate is increased by applying a current to the filler wire. In this case, no arc is generated from the filler wire.
(d) The plasma arc welding method, which is the same as the TIG in the principle, is a welding method in which the arc power is increased by tightening an arc by employing double gas supply systems and increasing the gas supply rate.
(e) The coated arc welding method is an arc welding method in which a coated arc welding rod in which a metal core wire is coated with flux is used as a filler. No shielding gas is necessary.

As for the filler material (welding material), common welding wires can be employed as long as the weld metal 40 is an Fe alloy. An Ni alloy can also be used because it does not cause any problems in welding to iron.

More specifically, on the market are JIS standard materials such as (a) Z3312, Z3313, Z3317, Z3318, Z3321, Z3323, and Z3334, (b) Z3313, (c) Z3316, S3321, and Z3334, and (d) Z3211, Z3221, Z3223, Z3224 andAWS (American Welding Society) standard materials such as (a) A5.9, A5.14, A5.18, A5.20, A5.22, A5.28, A5.29, and A5.34, (b) A5.20, (c) A5.9, A5.14, A5.18, and A5.28, and (d) A5.1, A5.4, A5.5, and A5.11.

The hollow portion 33 of the joining assist member 30 is filled with a filler material using the above arc welding methods. In general, it is not necessary to move the target position of the filler wire or welding rod. It is appropriate to finish welding by ending arc formation after a lapse of a proper supply time. However, in the case where the hollow portion 33 has a large area, the target position of the filler wire or welding rod may be moved so as to form a circle in the hollow portion 33.

It is desirable that the hollow portion 33 of the joining assist member 30 is filled with the weld metal 40 and, furthermore, an excess weld metal Wa is formed on the surface of the joining assist member 30 (see FIG. 1B). This is because the welding strength might be insufficient if no excess weld metal is formed, that is, a part of the hollow portion 33 remains in appearance after welding. In particular, formation of the excess weld metal provides higher strength against external stress in the thickness direction (three-dimensional directions).

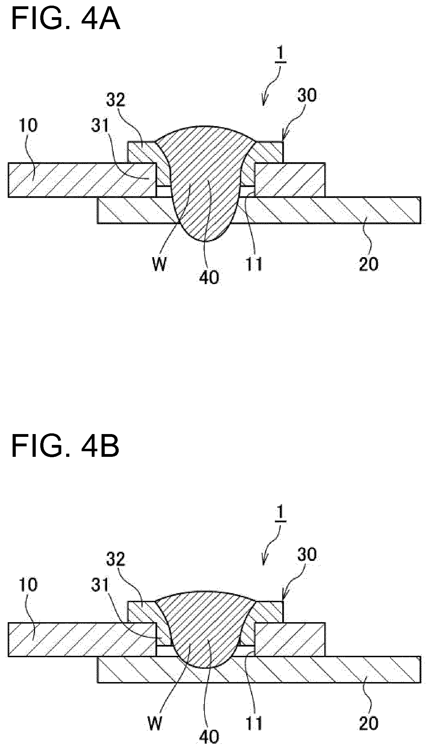

On the other hand, as for the weld penetration on the side opposite to the side of the excess weld metal, it is necessary that a part of the bottom plate 20 be melted to a proper extent as shown in FIG. 4A. There is no problem even if as shown in FIG. 4B the weld metal 40 is formed past the bottom surface of the bottom plate 20, that is, the bottom plate 20 is melted to such an extent that what is called a penetration bead is formed.

However, high strength cannot be obtained if no part of the bottom plate 20 is melted and the weld metal 40 is merely placed thereon. On the other hand, welding needs to be performed so that the weld metal 40 does not penetrate so deep that the weld metal 40 and the bottom plate 20 cause burn-through.

By the above steps of work, the top plate 10 made of an Al alloy or an Mg alloy and the bottom plate 20 made of steel are joined with high strength.

The steel joining assist member 30 that is used in the above-described arc spot welding method plays the following four roles.

As a first effect, it provides protective wall action for preventing melt of Al alloy or Mg alloy. Al alloy or Mg alloy in the joining portion is most likely to melt on the inner surface of the hole 11 and a surface portion around the inner surface. By covering these surfaces with the joining assist member 30, propagation of heat of arc welding directly to the Al alloy or Mg alloy is prevented and mixing with steel to form intermetallic compounds (IMCs) is prevented. Since the weld penetration range of the arc welding is restricted to within the joining assist member 30 and the bottom plate 20, there occurs no dilution of the weld metal 40 with Al or Mg and hence formation of IMCs can be prevented completely.

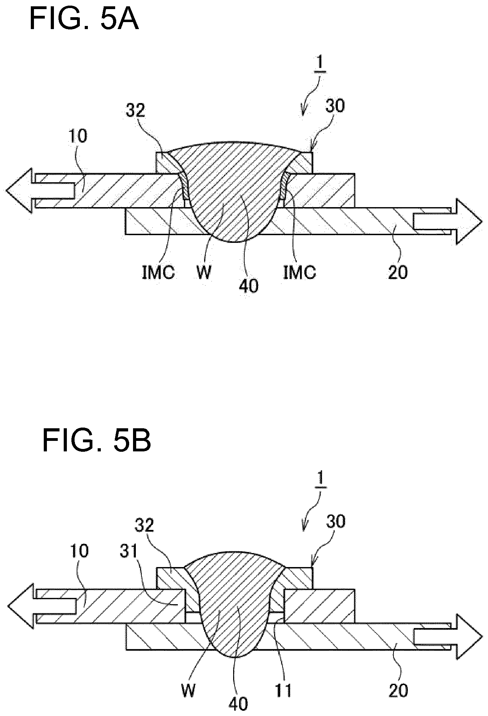

Thus, when the weld metal 40 is ductile and has proper strength, it provides resistance to external stress in the width direction (two-dimensional directions) as shown in FIG. 5A.

On the other hand, in the embodiment, it is not necessary to prevent formation of IMCs completely, that is, formation of a small amount of IMCs is allowable. This is because even if IMCs are formed on the inner surface of the hole 11 as shown in FIG. 5B, if the weld metal 40 is ductile and has proper strength, it provides resistance to external stress in the width direction (two-dimensional directions) and hence the influence of an IMC layer formed around the weld metal 40 is small. Although the IMCs are fragile, even if tensile stress acts on the structural body, both of compressional stress and tensile stress act on the joining portion at the same time and the IMCs are kept sufficiently strong for compressional force. For these reasons, the IMC layer thus formed does not cause propagation of destruction. Thus, the insertion portion 31 of the joining assist member 30 need not always be the same in thickness as the top plate 10.

As a second effect, the joining assist member 30 dominantly plays a role of providing resistance force when receiving external stress in the thickness direction, that is, peeling stress. Whereas as mentioned above the weld metal 40 acts as a resistive body in the width direction (two-dimensional directions), what is called "full coming-off" by peeling-off at the interface between the weld metal 40 and the top plate 10 is prone to occur when stress in the thickness direction (three-dimensional directions) is received.

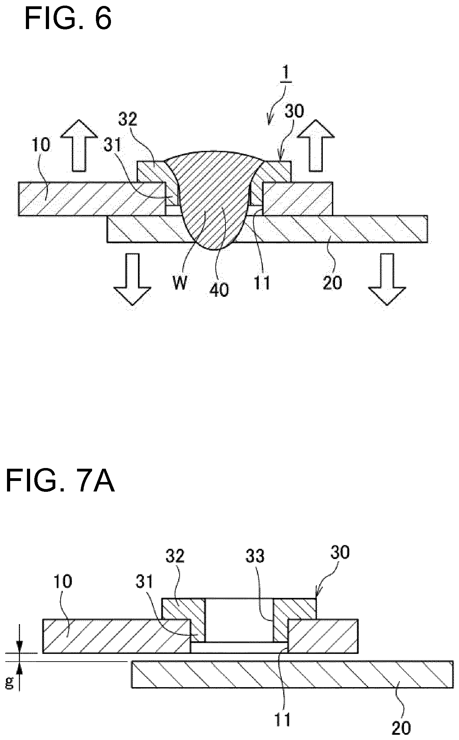

On the other hand, in the embodiment, since the joining assist member 30 has, on the top surface of the top plate 10, the non-insertion portion 32 which is larger in area than the hole 11, full coming-off can be prevented even if external forces are exerted in the thickness direction as indicated by arrows in FIG. 6. Thus, the joining assist member 30 needs to have a two-level external shape having different diameters.

In the arc welding step, the joining assist member 30, the weld metal 40, and the bottom plate 20 are joined by strong metallic bonding and, as a result, the non-insertion portion 32 of the joining assist member 30 serves as a resistive body against external stress in the thickness direction.

As described later in detail, the non-insertion portion 32 becomes stronger against external stress in the thickness direction (three-dimensional directions) as its diameter and thickness increase, and it is thus preferable. However, the non-insertion portion 32 being unduly large is a factor in increasing the weight and means too long a projection from the surface of the top plate 10, which would deteriorate the aesthetic appearance or cause interference with other, nearby members. Thus, the size of the non-insertion portion 32 should be determined so as to satisfy design requirements.

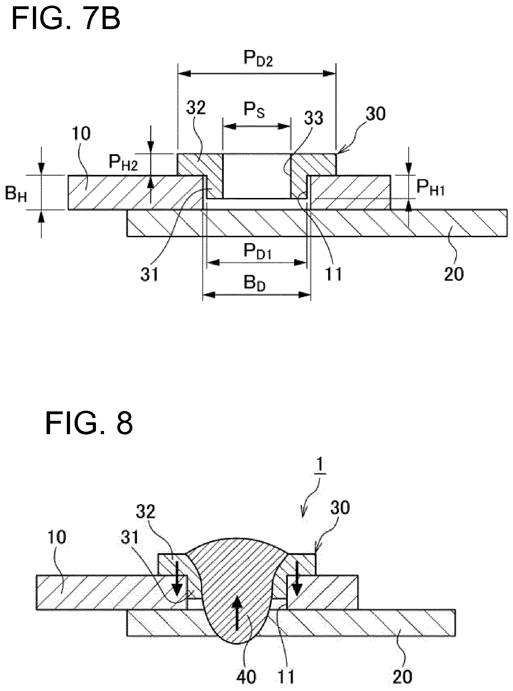

As a third effect, a gap g (see FIG. 7A) caused between the overlapped surfaces when the top plate 19 made of an Al alloy or an Mg alloy is overlapped with the bottom plate 20 made of steel is minimized. In the arc welding step, the weld metal 40 experiences thermal contraction and, during that course, force of causing the bottom plate 20 and the non-insertion portion 32 of the joining assist member 30 to come closer to each other acts on them. Thus, even if a small gap g exists before the welding, the gap g after the welding decreases, as shown in FIG. 7B, which means increase in the design accuracy of the joining portion.

As a fourth effect, the joining assist member 30 plays a role of assisting the positioning. The joining assist member 30 is inserted into the hole 11 of the top plate 10 with an expectation that the above-described three dynamic effects are obtained. In addition to the first effect of preventing melt of the top plate 10, the insertion portion 31 of the joining assist member 30 has a role of providing an index for allowing the joining assist member 30 to be set while determining its insertion position reliably. Without the insertion portion 31, there is no reference for placing the joining assist member 30 so as to be concentric with the hole 11. If arc welding is performed with the joining assist member 30 set at a position deviated from the hole 11, integral joining of the joining assist member 30, the weld metal 40, and the bottom plate 20 would become incomplete. Or, even worse, metal 40 might melt the top plate 10 made of an Al alloy or an Mg alloy and turn to IMCs and become fragile, resulting in a very weak joint connection force.

There are no particular limitations on the specific material of the steel joining assist member 30 except that it should be pure iron or an iron alloy. Specific examples include soft steel, carbon steel, and stainless steel.

As shown in FIG. 8, various dimensions of the joining assist member 30 are set in the following manners with respect to the top plate 10.

### Insertion portion height P_{H1}

The insertion portion height P_{H1} is designed to be 10% or larger and 100% or smaller of the thickness B_{H} of the top plate 10. The insertion portion 31 of the joining assist member 30 provides the above-described first effect (reduction of the melt amount of the Al or Mg top plate 10 during the welding step) and the fourth effect (positioning assist effect) of the joining assist member 30. As the insertion portion height P_{H1} increases, the degree of propagation of arc heat to the top plate 10 lowers and hence the first effect is enhanced, and it is thus desirable. However, when the insertion portion height P_{H1} is larger than the thickness B_{H} of the top plate 10, a gap is formed between the top plate 10 and the bottom plate 20, and it is thus not desirable. Thus, the upper limit of the insertion portion height P_{H1} is 100% of the thickness B_{H}. On the other hand, when the insertion portion height P_{H1} is smaller than 10%, the first effect cannot be obtained and the weld metal 40 becomes too brittle due to melt of the top plate 10. The fourth effect cannot be obtained either. Thus, the lower limit of the insertion portion height P_{H1} is 10%.

### Insertion portion diameter P_{D1}

The insertion portion diameter P_{D1} is designed to be 80% or more and 105% or smaller of the diameter B_{D} of the hole 11 of the top plate 10. As for the resistance force against movement of the top plate 10 in the horizontal direction (two-dimensional directions), although thermal contraction force resulting from welding of the joining assist member 30 and the bottom plate 20 (third effect) exercises auxiliary action, physical contact between the wall surface of the hole 11 of the top plate 10 and the insertion portion 31 of the joining assist member 30 (first effect) plays a main role in giving a strong resistance force against movement of the top plate 10 in the horizontal direction (two-dimensional directions). For the latter resistance force, a state where no gap exists between the insertion portion 31 of the joining assist member 30 and the hole 11 of the top plate 10 is the best. Thus, it is ideal that the insertion portion diameter P_{D1} is the same as (i.e., 100% of) the diameter B_{D} of the hole 11. However, the diameter of the insertion portion 31 of the joining assist member 30 being a little larger than the diameter B_{D} of the hole 11 raises no problem because the insertion portion 31 can be pushed in forcibly utilizing elastic deformation of a portion around the hole 11 of the top plate 10. The practical upper limit of the insertion portion diameter P_{D1} is 105% of the diameter B_{D} of the hole 11. On the other hand, presence of a gap is not desirable because deviation occurs easily when a horizontal force is received. But a strong resistance force is given due to contact between the two portions after movement of a distance corresponding to the gap. As described later, where the welding method according to the embodiment is applied to plural locations that are close to each other, gaps at the respective welding portions are seldom in the same direction. In terms of the probability theory, the gap directions are dispersed more as the number of welding portions increases. One welding portion gives resistance force against tensile stress in a certain direction and hence deviation does not occur easily. Therefore, in general a certain gap is allowable depending on the design accuracy. The lower limit of the insertion portion diameter P_{D1} is set at 80% of the diameter B_{D} of the hole 11. However, from the viewpoint of accuracy, it is even preferable that the lower limit be 90%.

### Non-insertion portion diameter P_{D2}

The non-insertion portion diameter P_{D2} is designed to be 105% or larger of the diameter B_{D} of the hole 11 of the top plate 10. As described in the second effect of the joining assist member 30, the non-insertion portion 32 of the joining assist member 30 dominantly plays a role of providing resistance force when external stress in the thickness direction, that is, peeling stress, is received. The non-insertion portion 32 becomes stronger with respect to external stress as its diameter P_{D2} and thickness increase. A larger and thicker non-insertion portion 32 is thus desirable. In the case where the non-insertion portion diameter P_{D2} is smaller than 105% of the diameter B_{D} of the hole 11, when an outer circumferential portion of the non-insertion portion 32 is deformed elasto-plastically by external stress in the thickness direction, the apparent diameter of the non-insertion portion 32 is very prone to become smaller than or equal to the diameter B_{D} of the hole 11 of the top plate 10, in which case the top plate 10 is prone to come off. That is, the non-insertion portion 32 does not provide a strong resistance force. Thus, the lower limit of the non-insertion portion diameter P_{D2} is set at 105% of the diameter B_{D} of the hole 11. It is even preferable that the lower limit of the non-insertion portion diameter P_{D2} be set at 120% of the diameter B_{D} of the hole 11. On the other hand, from the viewpoint of the strength of the joining portion, it is not necessary to set the upper limit.

### Non-insertion portion height P_{H2}

The non-insertion portion height P_{H2} is designed to be 50% or larger and 150% or smaller of the thickness B_{H} of the top plate 10. As described above, the non-insertion portion 32 becomes stronger with respect to external stress in the thickness direction (three-dimensional directions) as its diameter and height (thickness) increase, and it is thus desirable. A stronger resistance force is provided by increasing the non-insertion portion height P_{H2} according to the thickness B_{H} of the top plate 10 of the joint. In the case where the non-insertion portion height P_{H2} is smaller than 50% of the thickness B_{H} of the top plate 10, an outer circumferential portion of the non-insertion portion 32 is easily deformed elasto-plastically by external stress in the thickness direction. When the apparent diameter of the non-insertion portion 32 becomes smaller than or equal to the diameter B_{D} of the hole 11 of the top plate 10, coming-off is prone to occur. That is, the non-insertion portion 32 does not provide a strong resistance force. Thus, the lower limit of the non-insertion portion height P_{H2} is set at 50% of the thickness B_{H} of the top plate 10. On the other hand, where the non-insertion portion height P_{H2} is larger than 150% of the thickness B_{H} of the top plate 10, not only the appearance is poor because of excessive projection of the non-insertion portion 32 but also the weight is heavy though the joint has no problem in strength. Thus, it is necessary to set the non-insertion portion height P_{H2} 150% or smaller of the thickness B_{H} of the top plate 10.

As shown in FIG. 1, the diameter W_{D} of the excess weld metal Wa that is formed on the surface of the joining assist member 30 in the filling and welding step by arc is set 105% or larger of the diameter Ps of the hollow portion 33 of the joining assist member 30.

Although as described above the joining assist member 30 has a role of providing resistance force against external stress in the thickness direction (three-dimensional directions), a strong resistance force cannot be obtained unless the hollow portion 33 is filled up completely. When the hollow portion 33 is not filled up completely and part of the inner surface of the hollow portion 33 is left exposed, coming-off may occur easily because of an insufficient connection area of the joining assist member 30 and the weld metal 40. To increase the connection area of the joining assist member 30 and the weld metal 40, it is desired to fill up the hollow portion 33 completely and form an excess weld metal Wa. In the case where the excess weld metal Wa is formed, its diameter W_{D} should be larger than the diameter P_{S} of the hollow portion 33 of the joining assist member 30. The lower limit of the diameter W_{D} of the excess weld metal Wa is set 105% or larger of the diameter P_{S} of the hollow portion 33 of the joining assist member 30 because it means that the excess weld metal Wa has been formed surely.

Although it is not always necessary to restrict the thickness of the top plate 10 or the bottom plate 20, it is desirable to set the thickness of the top plate 10 4.0 mm or smaller when the working efficiency and the lap welding shape are taken into consideration. On the other hand, it is desirable that the thickness of each of the top plate 10 and the bottom plate 20 is 0.5 mm or larger because, considering a heat input of the arc welding, an unduly small thickness causes burn-through during welding and thereby makes the welding difficult.

With the above configurations, the top plate 10 made of an aluminum alloy or a magnesium alloy and the bottom plate 20 made of steel can be joined strongly.

It is known that the direct joining of different kinds of metals is associated with a problem other than the formation of IMCs. That is, when different kinds of metals are brought into contact with each other, a galvanic cell is formed, which is a cause of accelerating corrosion. Corrosion caused by this phenomenon (anode reaction in the cell) is called electric corrosion. Corrosion is accelerated when water exists in an interface where different kinds of metals are in contact with each other. Thus, where the embodiment is applied to a joining location into which water is prone to intrude, it is necessary to subject the joining location to sealing treatment for preventing intrusion of water to prevent electric corrosion. Also in this joining method, since there are plural interfaces where an Al alloy or Mg alloy comes into contact with steel, it is preferable to use a resin-based adhesive not only for further increase of joint strength but also as a sealing material.

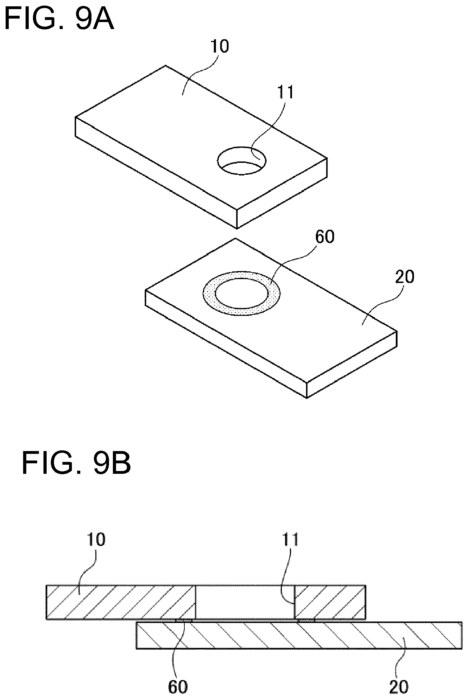

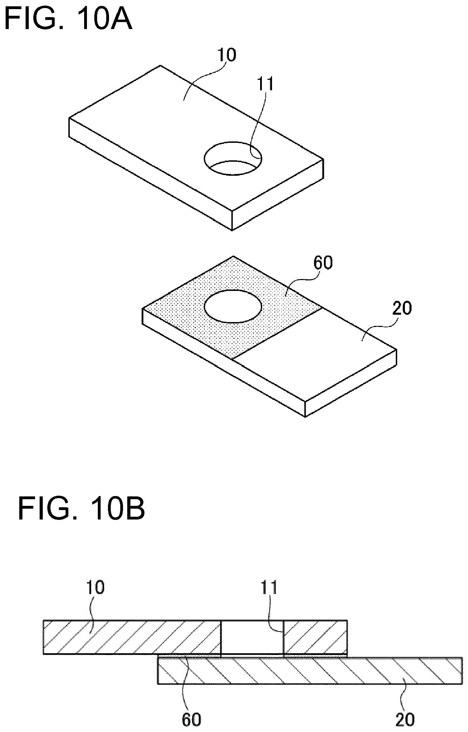

For example, as in a first modification shown in FIG. 9A and FIG. 9B, adhesive 60 may be applied in a ring-like shape around a welding portion over entire circumference between the joining surfaces of the top plate 10 and the bottom plate 20. As in the second modification shown in FIG. 10A and FIG. 10B, another method for applying adhesive 60 around a welding portion over entire circumference between joining surfaces of the top plate 10 and the bottom plate 20 includes a method in which adhesive 60 is applied in the entire area of the joining surface excluding the welding portion. This makes it possible to lower the electric corrosion rates of the top plate 10, the bottom plate 20, and the weld metal 40.

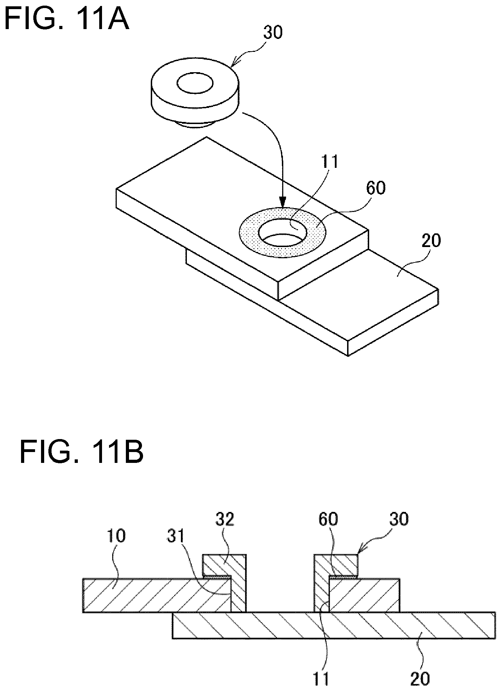

As in a third modification shown in FIG. 11A and 11B, adhesive 60 may be applied between a portion around the hole 11 of the top plate 10 and the bottom surface of the non-insertion portion 32 of the joining assist member 30. This makes it possible to lower the electric corrosion rates of the top plate 10, the joining assist member 30, and the weld metal 40.

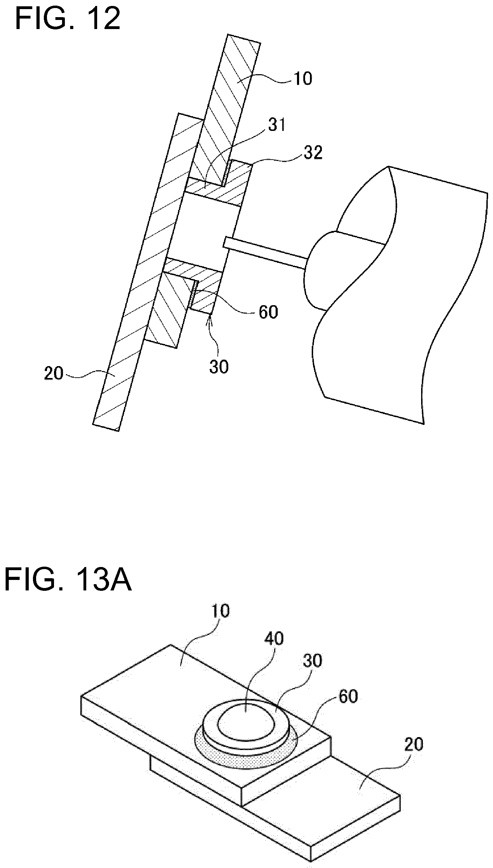

In this case, an auxiliary effect is obtained that the joining assist member 30 is tentatively fixed to the top plate 10 before arc welding. In particular, where as shown in FIG. 12 arc welding is performed in a horizontal or upward-directed posture, applying adhesive 60 in advance makes it possible to prevent the joining assist member 30 from coming off due to gravity and thereby perform welding properly.

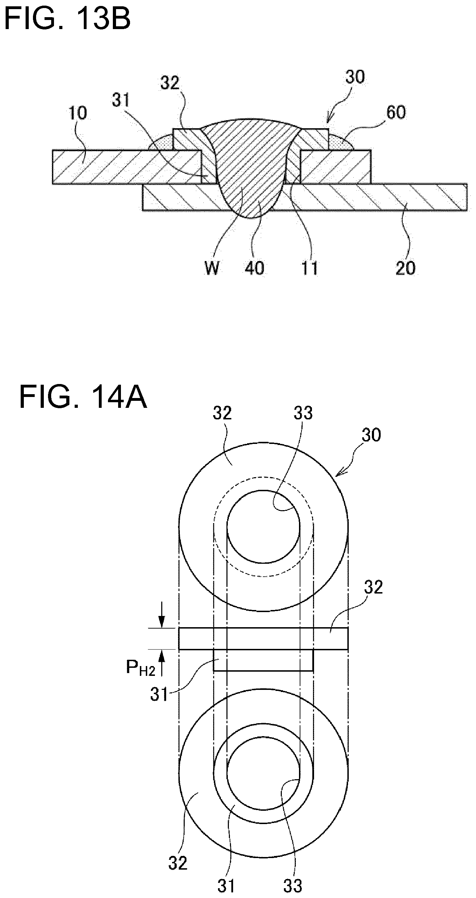

As in a fourth modification shown in FIG. 13A and 13B, adhesive 60 may be applied to the boundary between the non-insertion portion 32 of the joining assist member 30 and the surface of the top plate 10. This provides, in addition to the effect of lowering the electric corrosion rates, an effect that the joining assist member 30 is tentatively fixed to the top plate 10 if the adhesive 60 is applied before the arc welding. Whereas in the third modification shown in FIG. 11A and FIG. 11B, the application can be made only before the welding step, in the fourth modification shown in FIG. 13A and FIG. 13B, the application can be made either before or after the welding step.

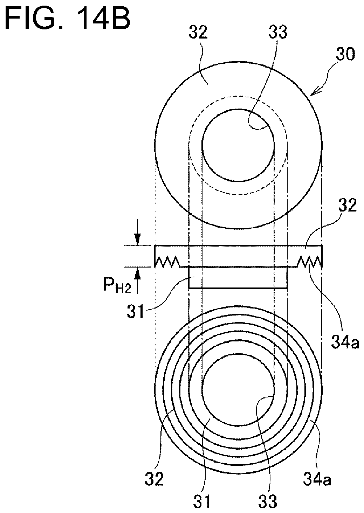

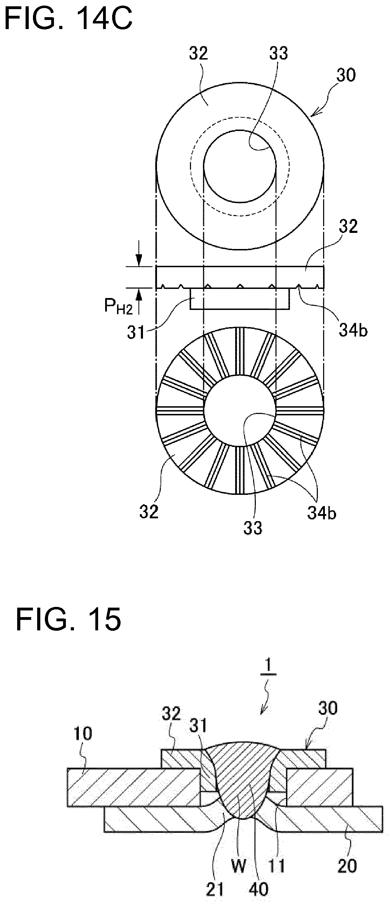

In the joining assist member 30, the surface, to come into contact with the top plate 10, of the non-insertion portion 32 need not always be a flat surface, as shown in FIG. 14A. That is, as shown in FIG. 14B and FIG. 14C, if necessary, the surface, to come into contact with the top plate 10, of the non-insertion portion 32 may have slits 34a or 34b. In particular, where the surface, to come into contact with the top plate 10, of the non-insertion portion 32 has circumferential slits 34a or radial slits 34b, applied adhesive 60 goes into the slits 34a or 34b and does not go away, whereby stable sticking is attained and a reliable sealing effect is obtained. In the case of having such a non-flat surface, a portion having the largest height is defined as the non-insertion portion height P_{H2}.

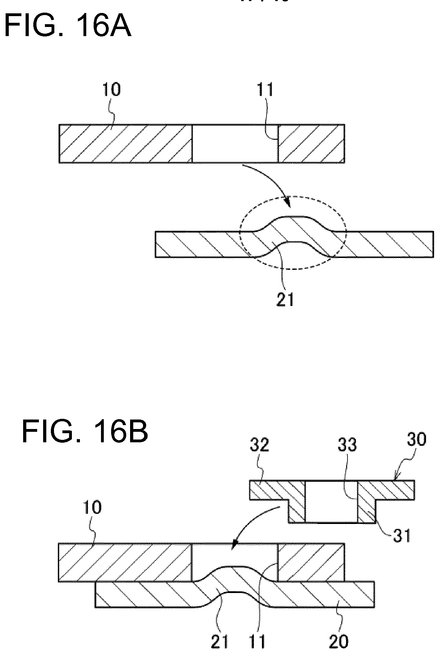

Furthermore, as in a fifth modification shown in FIG. 15 and FIG. 16A to FIG. 16C, the bottom plate 20 may have a swell portion 21.

There is a typical case where the thickness of the top plate 10 made of an Al alloy or an Mg alloy is large. In the case where the top plate 10 is thick, it is necessary to fill up the hollow portion 33 of the joining assist member 30 by melting a large amount of welding wire in the welding step. In this case, because of an excess amount of heat supplied, a part of the bottom plate 20 made of steel tends to cause burn-through before filling-up of the hollow portion 33. If the bottom plate 20 has the swell portion 21 formed by drawing as a countermeasure, the volume of the hollow portion 33 is reduced, whereby the hollow portion 33 can be filled up while a burn-through failure is prevented.

In addition, in the fifth modification, the swell portion 21 of the bottom plate 20 can be used as a mark when the top plate 10 and the bottom plate 20 are positioned with respect to each other. As a result, the swell portion 21 of the bottom plate 20 and the hole 11 of the top plate 10 can easily be positioned with respect to each other and the efficiency of overlapping work can be increased.

Since the welding method of this embodiment can be called spot welding with a small joining area, in the case of joining overlapped portions J of materials of actual used having a relatively large joining area, this welding method may be employed at plural positions in manners shown in FIG. 17A to FIG. 17C. Thereby, strong joining can be attained in the overlapped portions J. Whereas the embodiment can be used for open section structures as exemplified in FIG. 17B and FIG. 17C, it can be used particularly suitably for closed section structures as exemplified in FIG. 17A.

As described above, the arc spot welding method for dissimilar material joining according to the embodiment includes a step of making a hole 11 through a top plate 10; a step of overlapping the top plate 10 and a bottom plate 20; a step of inserting a joining assist member 30 made of steel into the hole 11 formed in the top plate 10, the joining assist member 30 having a stepped external shape including an insertion portion 31 and a non-insertion portion 32 and having a hollow portion 33 formed to penetrate through the insertion portion 31 and the non-insertion portion 32; and a step of filling the hollow portion 33 of the joining assist member 30 with a weld metal 40 and welding the bottom plate 20 and the joining assist member 30 by any method of the following (a) to (e).

(a) A gas-shielded arc welding method using, as a consumable electrode, a welding to provide the weld metal 40 made of an iron alloy or an Ni alloy;
(b) a non-gas arc welding method using the above welding wire as a consumable electrode;
(c) a gas tungsten arc welding method using the above welding wire as a non-consumable electrode filler;
(d) a plasma arc welding method using the above welding wire as a non-consumable electrode filler; and
(e) a coated arc welding method using, as a consumable electrode, a coated arc welding rod to provide the weld metal 40 made of an iron alloy or an Ni alloy.

This method makes it possible to join the top plate 10 made of an Al alloy or an Mg alloy and the bottom plate 20 made of steel using an inexpensive arc welding facility with quality of being high in strength and reliability, and can be applied to both of an open section structure and a closed section structure with no limitations.

The above method further includes, before the overlapping step, a step of applying an adhesive 60 to at least one of overlapped surfaces of the top plate 10 and the bottom plate 20 around the hole 11 over its entire circumference. Thereby, the adhesive 60 not only increases the strength of a joint but also serves as a sealing material and can thereby lower the corrosion rates of the bottom plate 20 and the weld metal 40.

In the inserting step, an adhesive 60 is applied to at least one of confronting surfaces between the non-insertion portion 32 of the joining assist member 30 and the top plate 10 opposed to the non-insertion portion 32. Thereby, the corrosion rates of the top plate 10, the joining assist member 30, and the weld metal 40 can be lowered.

In the inserting step or after the filling and welding step, an adhesive 60 is applied to the boundary between the non-insertion portion 32 of the joining assist member 30 and the surface of the top plate 10. Thereby, the joining strength of the top plate 10 and the joining assist member 30 can be increased. Applying the adhesive 60 in the inserting step can provide an effect of fixing the joining assist member 30 tentatively.

The height P_{H1} of the insertion portion 31 of the joining assist member 30 is 10% or larger and 100% or smaller of the thickness B_{H} of the top plate 10. This provides an effect of preventing heat propagation to the top plate 10 during the welding step and a positioning assisting effect.

The diameter P_{D1} of the insertion portion 31 of the joining assist member 30 is 80% or larger and 105% or smaller of the diameter B_{D} of the hole 11 of the top plate 10. This makes it possible to satisfy both of necessary resistance to external stress in the thickness direction and ease of insertion of the joining assist member 30.

The diameter P_{D2} of the non-insertion portion 32 of the joining assist member 30 is 105% or larger of the diameter B_{D} of the hole 11 of the top plate 10. This allows the non-insertion portion 32 to function as resistance force against external stress in the thickness direction.

The height P_{H2} of the non-insertion portion 32 of the joining assist member 30 is 50% or larger and 150% or smaller of the thickness B_{H} of the first plate. This allows the non-insertion portion 32 to function as resistance force against external stress in the thickness direction while taking appearance and weight increase into consideration.

An excess weld metal Wa is formed on the surface of the joining assist member, and the diameter W_{D} of the excess weld metal Wa is 105% or larger of the diameter Ps of the hollow portion 33 of the joining assist member 30. This allows the excess weld metal Wa to function as resistance force against external stress in the thickness direction.

The joining assist member 30 according to the embodiment is made of steel and has a stepped external shape including an insertion portion 31 and a non-insertion portion 32, and has a hollow portion 33 formed to penetrate through the insertion portion 31 and the non-insertion portion 32. Configured in this manner, the joining assist member 30 can be used suitably for the above-described arc spot welding method for dissimilar material joining.

The dissimilar material welded joint 1 according to the embodiment includes a top plate 10 made of an aluminum alloy or a magnesium alloy and a bottom plate 20 made of steel and arc-spot-welded to the top plate 10, wherein the top plate 10 has a hole 11 that reaches the overlapped surface to the bottom plate 20. The dissimilar material welded joint 1 further includes a joining assist member 30 made of steel, the joining assist member 30 having a stepped external shape including an insertion portion 31 inserted in the hole 11 formed through the top plate 10 and a non-insertion portion 32, and having a hollow portion 33 formed to penetrate through the insertion portion 31 and the non-insertion portion 32. The hollow portion 33 of the joining assist member 30 is filled with a weld metal 40 made of an iron alloy or an Ni alloy, and a melting portion W is formed of the weld metal 40 and a part of melted portions of the bottom plate 20 and the joining assist member 30.

This dissimilar material welded joint 1 having the top plate 10 made of an Al alloy or an Mg alloy and the bottom plate 20 made of steel is joined using an inexpensive arc welding facility with joining quality of being high in strength and reliability, and can be applied to both of an open section structure and a closed section structure with no limitations.

The invention is not limited to the above-described embodiment and Examples and various modifications, improvements, etc. are possible as appropriate.

### Examples

The effectiveness of the embodiment was confirmed using Examples A to E described below.

### <Examples A>

In Examples A, a lap joint was used having a combination of a 1.6 mm-thick top plate 10 made of an aluminum alloy A5083 and a 1.4 mm-thick bottom plate 20 made of 590 MPa-class high tensile strength steel. This lap joint was joined by fixed-point arc welding of a prescribed time by a MAG welding method using a 1.2 mm-diameter JIS Z3312 YGW16 steel welding wire and using, as a shielding gas, a mixed gas of 80% Ar and 20% CO₂.

This welding joint 1 was subjected to breaking tests according to JIS Z3136 "Test piece dimensions and test method of shearing test of resistance spot and projection welding joint" and JIS Z3137 "Cross tension test for resistance spot and projection welding joint." In the following, tensile strength of Z3136 was referred to as TSS and tensile strength of Z3137 was referred to as CTS. Acceptance criteria were TSS ≥ 8 kN and CTS ≥ 5 kN.

To obtain preferable performance values, but not indispensable, the welding joint 1 was also subjected to JASO-CCT (Japanese Automobile Standards Organization Cyclic Corrosion Test) in which a welded joint was subjected to repetition of spraying of salt water, drying, and moistening to cause accelerated corrosion, through 28 days. It was then subjected to the same breaking tests as described above to obtain TSS after corrosion and CTS after corrosion. Acceptance criteria for these preferable performance values were that they should be 80% or larger of respective values of the tests without corrosion.

In Table 1, Comparative Examples are denoted by Nos. A1 to A5 and Examples are denoted by Nos. A6 to A14. (Symbol U means "used" and NU means "not used," and symbol F means "formed" and NF means "not formed.")

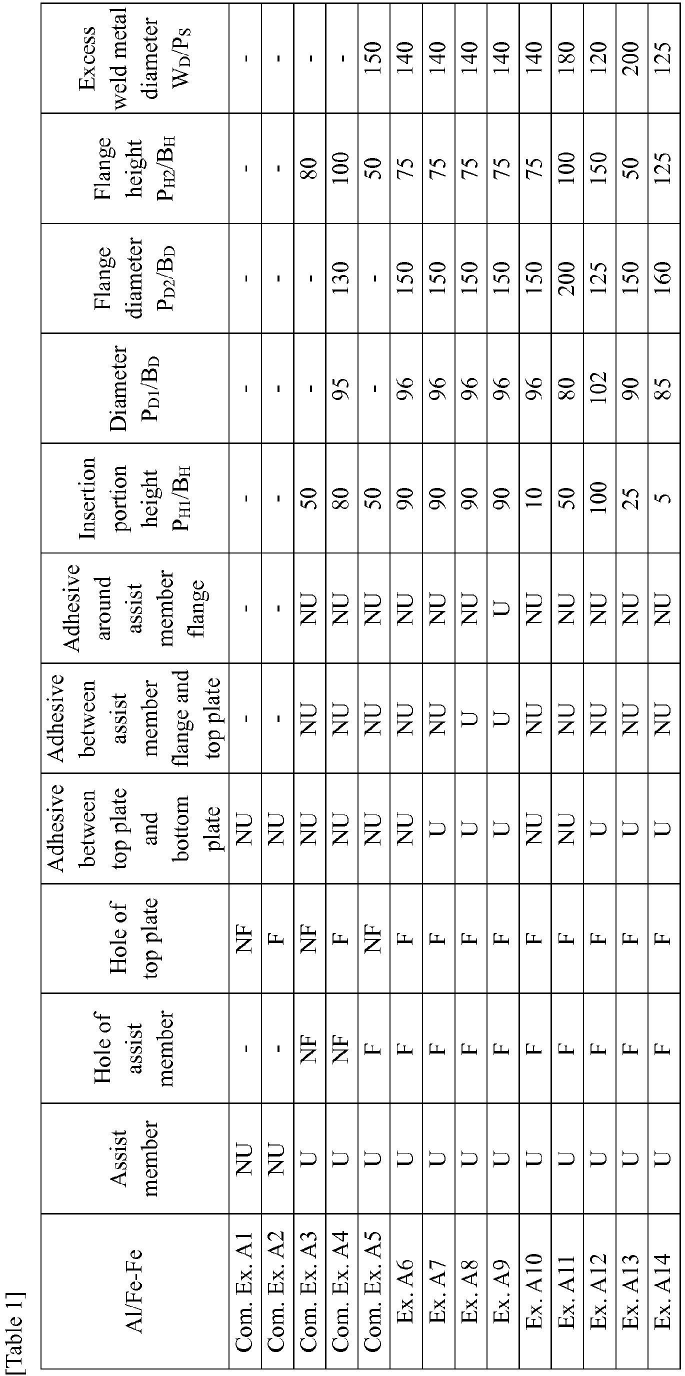

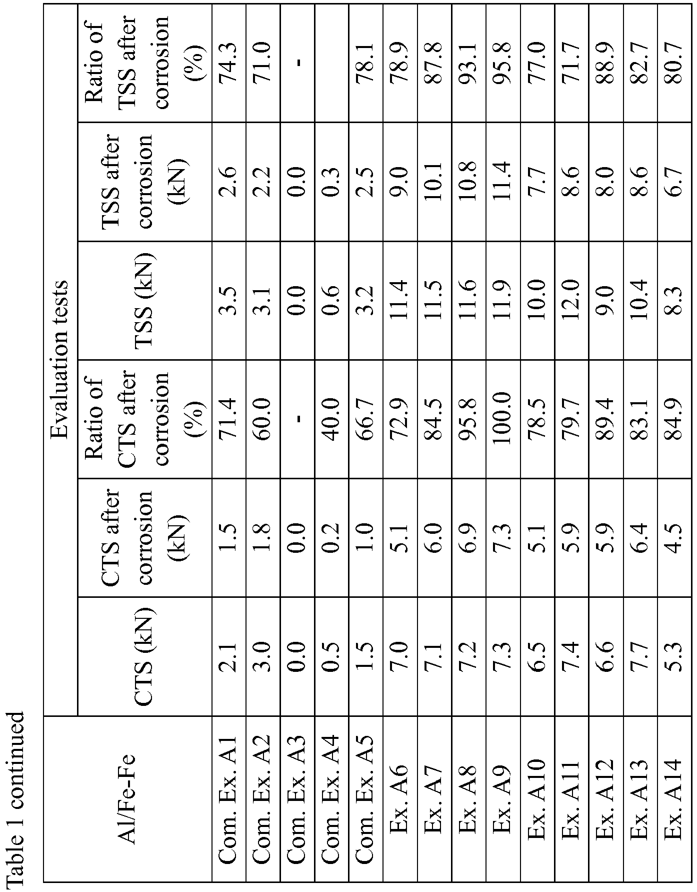

In No. A1, no joining assist member was used, no hole was made through the top plate 10, and arc welding was performed directly on the top plate 10. No adhesive was used. Since a steel welding wire and an aluminum base material were melt-mixed, a weld metal formed was very fragile intermetallic compounds and TSS and CTS were low.

In No. A2, arc welding was performed without using the joining assist member 30 though a 7.0 mm-diameter hole 11 was made through the top plate 10. Since the aluminum mixing proportion of a weld metal was smaller than in No. A1, the amount of intermetallic compounds was small and the degree of embrittlement was low. However, TSS and CTS were still low.

In No. A3, the joining assist member 30 was put on the top plate 10 through which no hole was made and arc welding was performed from above the joining assist member 30. The material of the joining assist member 30 was JIS G3106 SM490C (this also applies to the following samples of Examples A). No hole was made through the joining assist member 30. As a result, weld penetration into the bottom plate 20 through the joining assist member 30 and the top plate 10 could not be caused and the welding failed.

In No. A4, the joining assist member 30 was put on the top plate 10 through which a 7.0 mm-diameter hole 11 was made and arc welding was performed from above the joining assist member 30. No hole was made through the joining assist member 30. As a result, weld penetration into the bottom plate 20 through the joining assist member 30 was narrowly caused. However, the weld penetration width in the bottom plate 20 was very small and the sample was broken easily in the breaking tests.

In No. A5, the joining assist member 30 was put on the top plate 10 through which no hole was made and arc welding was performed from above the joining assist member 30. A 5.0 mm-diameter hole was made through the joining assist member 30. As in No. A1, a steel welding wire and an aluminum base material were melt-mixed to form a weld metal. Thus, the weld metal formed was very fragile intermetallic compounds and TSS and CTS were low.

On the other hand, in Nos. A6 to A14, the joining assist member 30 was put on the top plate 10 through which a 7.0 mm-diameter hole 11 was made and arc welding was performed from above the joining assist member 30. A 5.0 mm-diameter hole was made through the joining assist member 30 and the insertion portion 31 was formed so as to be inserted in the hole 11 of the top plate 10. The joining assist member 30 had a two-level shape. In these samples, inflow of aluminum into a weld metal 40 formed was restricted to zero or a very small amount by virtue of the presence of the joining assist member 30, whereby a high-quality weld metal was formed. Furthermore, since the degree of weld penetration into the bottom plate 20 was sufficiently high and the non-insertion portion of the joining assist member 30 was larger in area than the hole 11 of the top plate 10, full coming-off was prevented and high CTS was obtained in the cross tension test. Still further, in the samples (Nos. A7 to A9 and A12 to A14) in which a normal temperature quick setting two-liquid-mixing adhesive for metal was applied at a proper location(s), an effect of preventing electric corrosion at aluminum-steel interfaces was obtained, whereby reduction in CTS and TSS due to corrosion was suppressed and high CTS and TSS after corrosion were obtained. More specifically, it is seen that the CTS after corrosion and the TSS after corrosion increase as the number of adhesive application locations increases in order of No. A6, No. A7, No. A8, and No. A9.

### <Examples B>

In Examples B, a lap joint was used having a combination of a 0.8 mm-thick top plate 10 made of a magnesium alloy ASTM AZ31B and a 1.0 mm-thick bottom plate 20 made of 780 MPa-class high tensile strength steel. This lap joint was joined by fixed-point arc welding of a prescribed time by an AC TIG welding method using a 1.0 mm-diameter JIS Z3316 YGT50 steel welding wire as a non-current filler and using, as a shielding gas, 100% Ar gas.

This welding joint 1 was subjected to breaking tests according to JIS Z3136 and JIS Z3137. In the following, tensile strength of Z3136 was referred to as TSS and tensile strength of Z3137 was referred to as CTS. Acceptance criteria were TSS ≥ 4 kN and CTS ≥ 3 kN.

To obtain preferable performance values, but not indispensable, as in Examples A, the welding joint 1 was also subjected to JASO-CCT for 28 days and then subjected to the same breaking tests as described above to obtain TSS after corrosion and CTS after corrosion. Acceptance criteria for these preferable performance values were that they should be 80% or larger of respective values of the tests without corrosion.

In Table 2, Comparative Examples are denoted by Nos. B1 to B5 and Examples are denoted by Nos. B6 to B14.

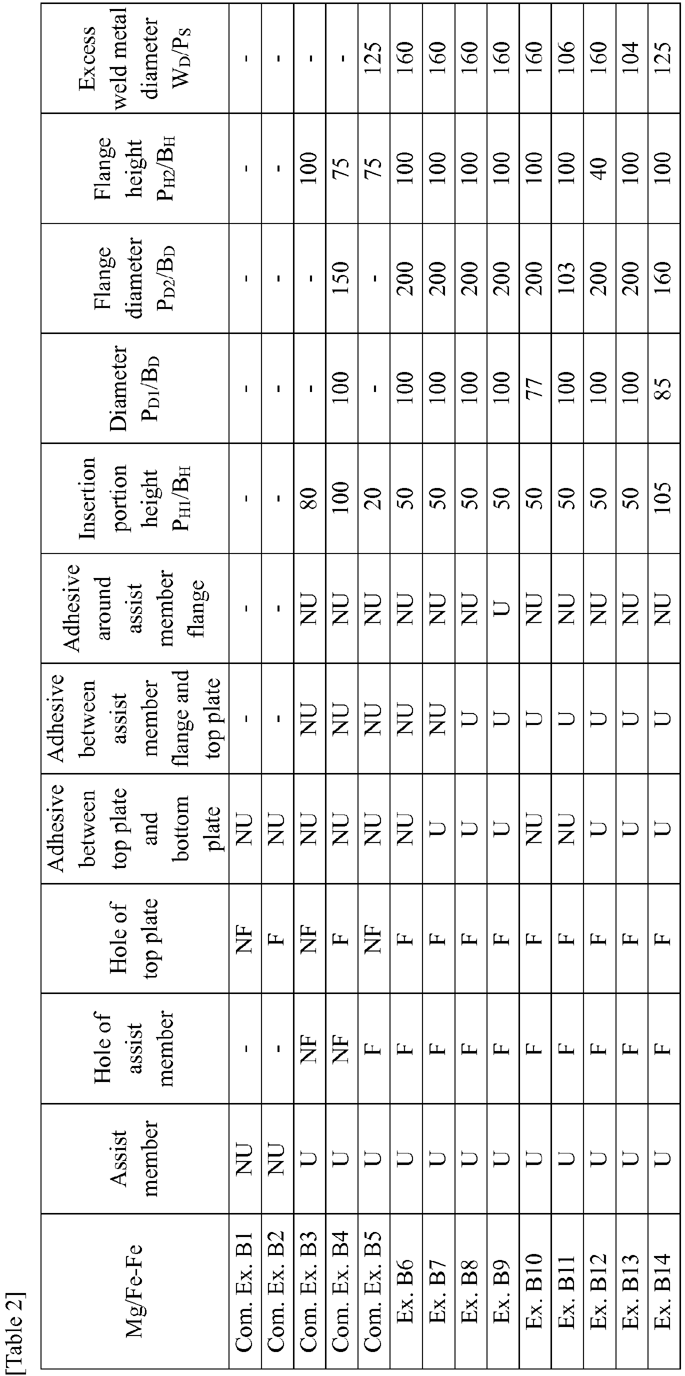

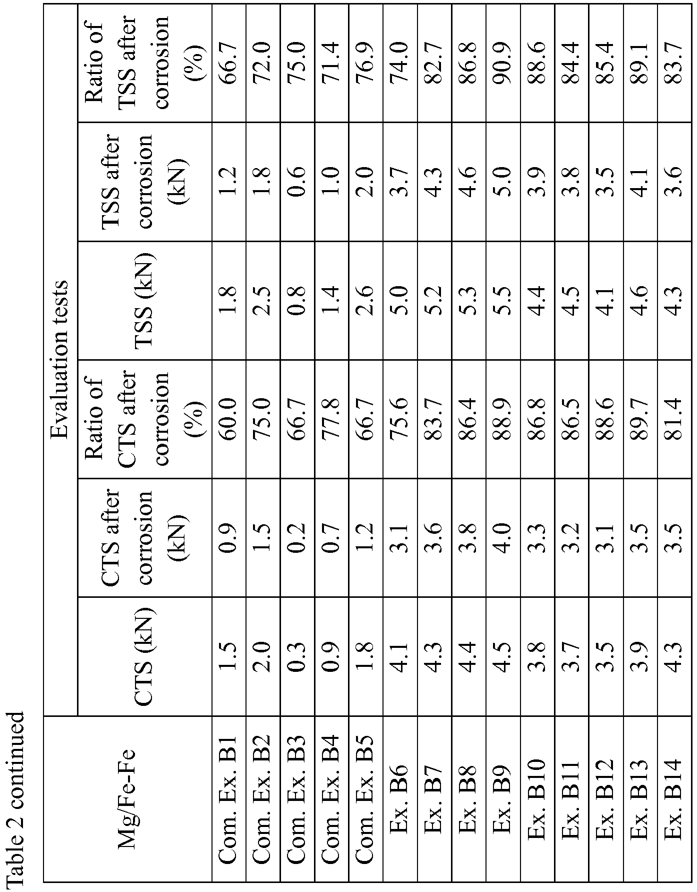

In No. B1, no joining assist member was used, no hole was made through the top plate 10, and arc welding was performed directly on the top plate 10. No adhesive was used. Since a steel welding wire and a magnesium base material were melt-mixed, a weld metal formed was very fragile intermetallic compounds and TSS and CTS were low.

In No. B2, arc welding was performed without using the joining assist member though a 5.0 mm-diameter hole 11 was made through the top plate 10. Since the magnesium mixing proportion of a weld metal was smaller than in No. B1, the amount of intermetallic compounds was small and the degree of embrittlement was low. However, TSS and CTS were still low.

In No. B3, the joining assist member 30 was put on the top plate 10 through which no hole was made and arc welding was performed from above the joining assist member 30. The material of the joining assist member 30 was JIS G3101 SS400 (this also applies to the following samples of Examples B). No hole was made through the joining assist member 30. As a result, weld penetration into the bottom plate 20 through the joining assist member 30 and the top plate 10 was narrowly caused. However, the weld penetration width in the bottom plate 20 was very small and the sample was broken easily in the breaking tests.

In No. B4, the joining assist member 30 was put on the top plate 10 through which a 5.0 mm-diameter hole 11 was made and arc welding was performed from above the joining assist member 30. No hole was made through the joining assist member 30. As a result, weld penetration into the bottom plate 20 through the joining assist member 30 was narrowly caused. However, the weld penetration width in the bottom plate 20 was very small and the sample was broken easily in the breaking tests.

In No. B5, the joining assist member 30 was put on the top plate 10 through which no hole was made and arc welding was performed from above the joining assist member 30. A 3.8 mm-diameter hole was made through the joining assist member 30. As in No. B1, a steel welding wire and a magnesium base material were melt-mixed to form a weld metal. Thus, the weld metal formed was very fragile intermetallic compounds and TSS and CTS were low.

On the other hand, in Nos. B6 to B14, the joining assist member 30 was put on the top plate 10 through which a 5.0 mm-diameter hole 11 was made and arc welding was performed from above the joining assist member 30. A 3.8 mm-diameter hole was made through the joining assist member 30 and the insertion portion 31 was formed so as to be inserted in the hole 11 of the top plate 10. The joining assist member 30 had a two-level shape. In these samples, the inflow of magnesium into a weld metal 40 formed was restricted to zero or a very small amount by virtue of the presence of the joining assist member 30, whereby a high-quality weld metal 40 was formed. Furthermore, since the degree of weld penetration into the bottom plate 20 was sufficiently high and the non-insertion portion 32 of the joining assist member 30 was larger in area than the hole 11 of the top plate 10, full coming-off was prevented and high CTS was obtained in the cross tension test. Still further, in the samples (Nos. B7 to B14) in which an adhesive was applied at a proper location(s), an effect of preventing electric corrosion at magnesium alloy-steel interfaces was obtained, whereby reduction in CTS and TSS due to corrosion was suppressed and high CTS and TSS after corrosion were obtained. More specifically, it is seen that the CTS after corrosion and the TSS after corrosion increase as the number of adhesive application locations increases in order of No. B6, No. B7, No. B8, and No. B9.

### <Examples C>

In Examples C, a lap joint was used having a combination of a 2.6 mm-thick top plate 10 made of an aluminum alloy A6061 and a 2.2 mm-thick bottom plate 20 made of 400 MPa-class steel. This lap joint was joined by fixed-point arc welding of a prescribed time by a coated arc welding method using a 4.0 mm-diameter JIS Z3252 ECNi-C1 Ni alloy coated arc welding rod.

This welding joint 1 was subjected to breaking tests according to JIS Z3136 and JIS Z3137. In the following, tensile strength of Z3136 was referred to as TSS and tensile strength of Z3137 was referred to as CTS. Acceptance criteria were TSS ≥ 9 kN and CTS ≥ 6 kN.

To obtain preferable performance values, but not indispensable, as in Examples A and B, the welding joint 1 was also subjected to JASO-CCT for 28 days and then subjected to the same breaking tests as described above to obtain TSS after corrosion and CTS after corrosion. Acceptance criteria for these preferable performance values were that they should be 80% or larger of respective values of the tests without corrosion.

In Table 3, Comparative Examples are denoted by Nos. C1 to C5 and Examples are denoted by Nos. C6 to C13.

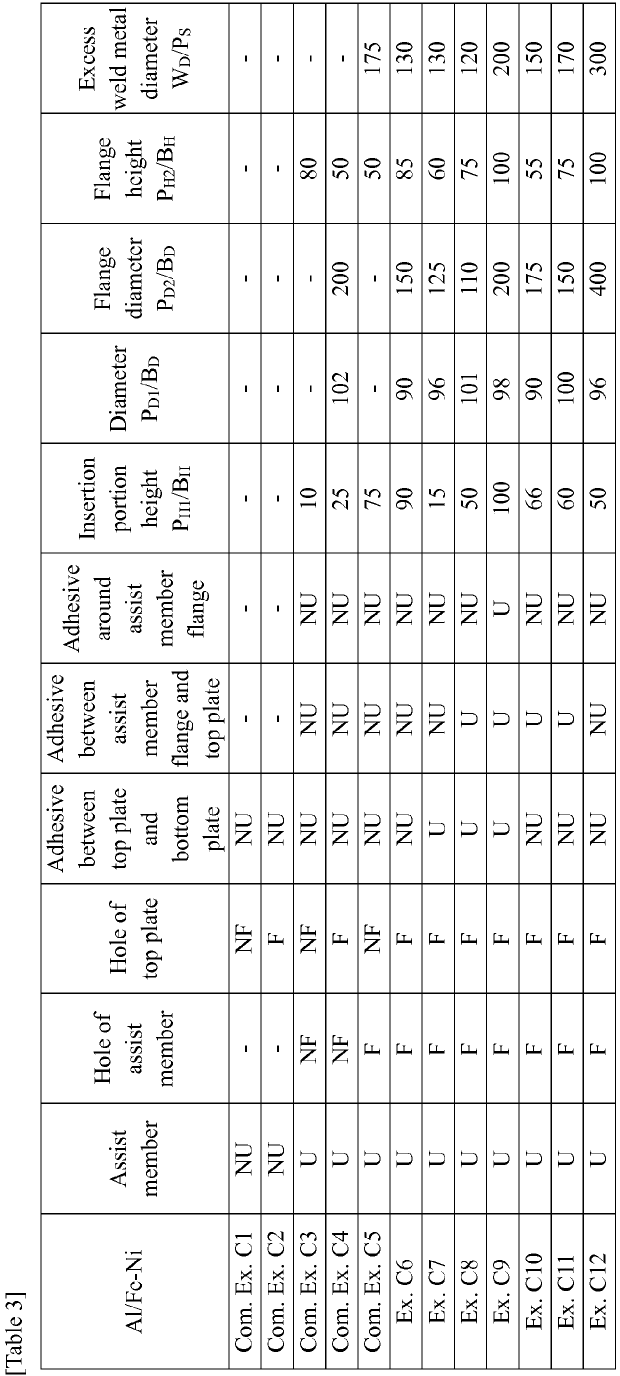

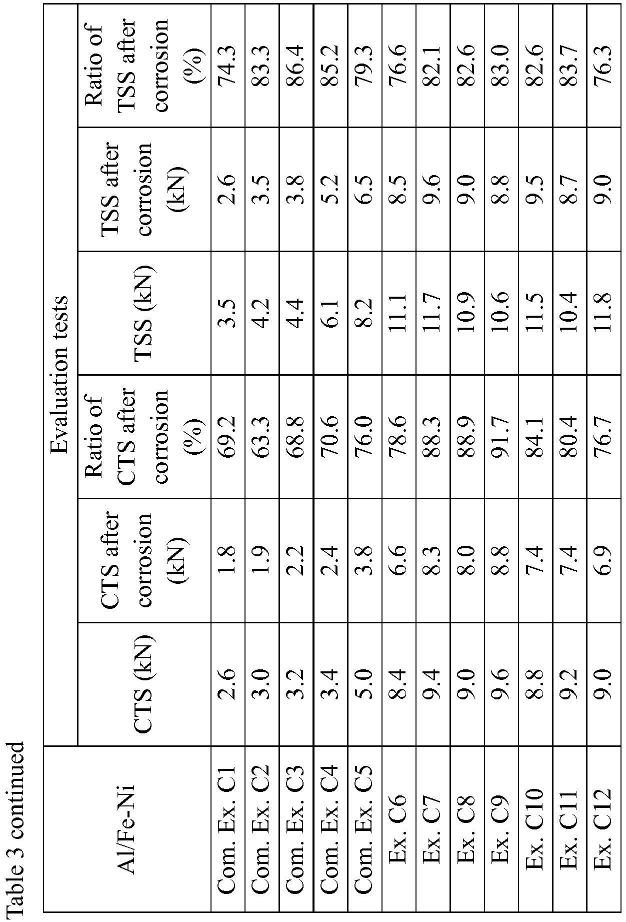

In No. C1, no joining assist member was used, no hole was made through the top plate 10, and arc welding was performed directly on the top plate 10. No adhesive was used. Since an Ni alloy welding rod and an aluminum base material were melt-mixed, a weld metal formed was very fragile intermetallic compounds and TSS and CTS were low.

In No. C2, arc welding was performed without using the joining assist member 30 though a 9.0 mm-diameter hole 11 was made through the top plate 10. Since the aluminum alloy mixing proportion of a weld metal was smaller than in No. C1, the amount of intermetallic compounds was small and the degree of embrittlement was low. However, TSS and CTS were still low.

In No. C3, the joining assist member 30 was put on the top plate 10 through which no hole was made and arc welding was performed from above the joining assist member 30. The material of the joining assist member 30 was JIS G4051 S12C (this also applies to the following samples of Examples C). No hole was formed through the joining assist member 30. As a result, weld penetration into the bottom plate 20 through the joining assist member 30 and the top plate 10 could not be caused and the welding failed.

In No. C4, the joining assist member 30 was put on the top plate 10 through which a 9.0 mm-diameter hole 11 was made and arc welding was performed from above the joining assist member 30. No hole was made through the joining assist member 30. As a result, weld penetration into the bottom plate 20 through the joining assist member 30 was narrowly caused. However, the weld penetration width in the bottom plate 20 was very small and the sample was broken easily in the breaking tests.

In No. C5, the joining assist member 30 was put on the top plate 10 through which no hole was made and arc welding was performed from above the joining assist member 30. A 7.0 mm-diameter hole was formed through the joining assist member 30. As in No. C1, an Ni alloy welding rod and a magnesium alloy base material were melt-mixed to form a weld metal. Thus, the weld metal formed was very fragile intermetallic compounds and TSS and CTS were low.

On the other hand, in Nos. C6 to C12, the joining assist member 30 was put on the top plate 10 through which a 9.0 mm-diameter hole 11 was made and arc welding was performed from above the joining assist member 30. A 7.0 mm-diameter hole was made through the joining assist member 30 and the insertion portion 31 was formed so as to be inserted in the hole 11 of the top plate 10. The joining assist member 30 had a two-level shape. In these samples, inflow of aluminum into a weld metal formed was restricted to zero or a very small amount by virtue of the presence of the joining assist member 30, whereby a high-quality weld metal was formed. Furthermore, since the degree of weld penetration into the bottom plate 20 was sufficiently high and the non-insertion portion 32 of the joining assist member 30 was larger in area than the hole 11 of the top plate 10, full coming-off was prevented and high CTS was obtained in the cross tension test. Still further, in the samples (Nos. C7 to C11) in which an adhesive was applied at a proper location(s), an effect of preventing electric corrosion at aluminum-steel interfaces was obtained, whereby reduction in CTS and TSS due to corrosion was suppressed and high CTS and TSS after corrosion were obtained.

### <Examples D>

In Examples D, a lap joint was used having a combination of a 1.2 mm-thick top plate 10 made of an aluminum alloy A6N01 and a 1.2 mm-thick bottom plate 20 made of SPCC steel. This lap joint was joined by fixed-point arc welding of a prescribed time by a self-shielded arc welding method using a 1.2 mm-diameter JIS Z3313 T49T14-0NS-G steel wire containing flux.

This welding joint 1 was subjected to breaking tests according to JIS Z3136 and JIS Z3137. In the following, tensile strength of Z3136 was referred to as TSS and tensile strength of Z3137 was referred to as CTS. Acceptance criteria were TSS ≥ 6 kN and CTS ≥ 4 kN.

To obtain preferable performance values, but not indispensable, as in Examples A, B, and C, the welding joint 1 was also subjected to JASO-CCT for 28 days and then subjected to the same breaking tests as described above to obtain TSS after corrosion and CTS after corrosion. Acceptance criteria for these preferable performance values were that they should be 80% or larger of respective values of the tests without corrosion.

In Table 4, Comparative Examples are denoted by Nos. D1 and D2 and Examples are denoted by Nos. D3 and D4.

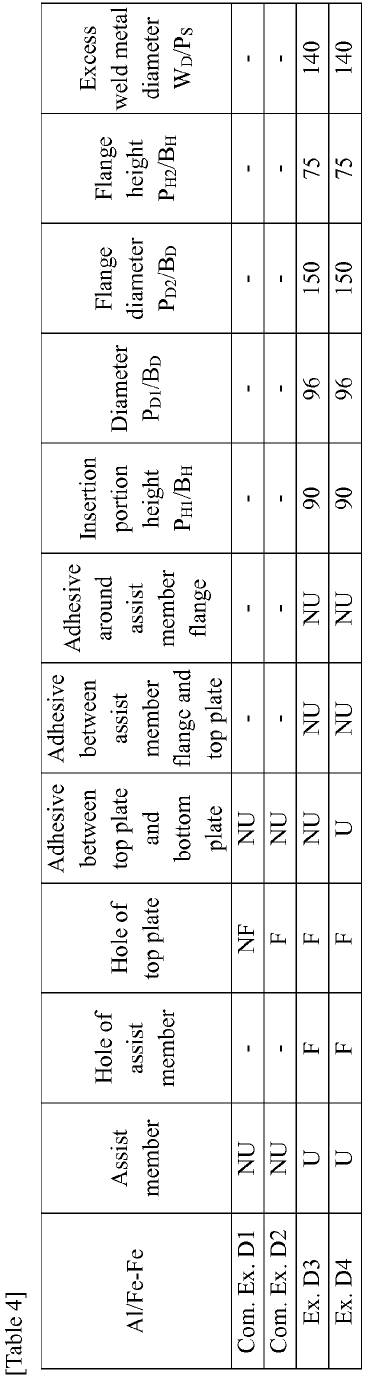

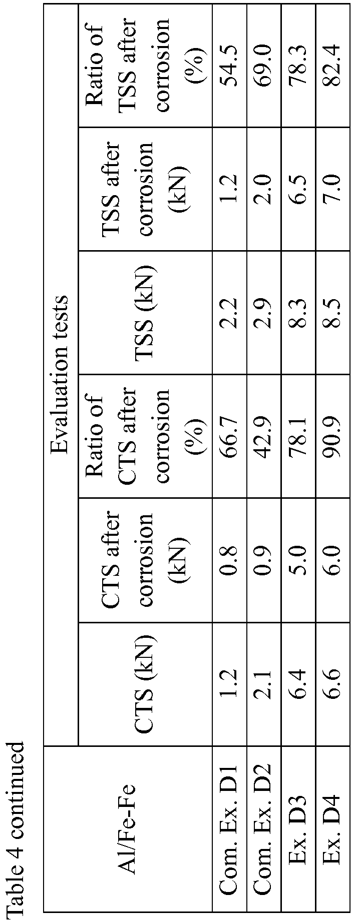

In No. D1, no joining assist member was used, no hole was made through the top plate 10, and arc welding was performed directly on the top plate 10. No adhesive was used. Since a steel welding wire and an aluminum base material were melt-mixed, a weld metal formed was very fragile intermetallic compounds and TSS and CTS were low.

In No. D2, arc welding was performed without using the joining assist member 30 though a 6.0 mm-diameter hole 11 was made through the top plate 10. Since the aluminum alloy mixing proportion of a weld metal was smaller than in No. D1, the amount of intermetallic compounds was small and the degree of embrittlement was low. However, TSS and CTS were still low.

On the other hand, in Nos. D3 and D4, a joining assist member 30 produced by working a member made of JIS G3106 SM490A was put on the top plate 10 through which a 6.0 mm-diameter hole 11 was made and arc welding was performed from above the joining assist member 30. A 4.4 mm-diameter hole was made through the joining assist member 30 and the insertion portion 31 was formed so as to be inserted in the hole 11 of the top plate 10. The joining assist member 30 had a two-level shape. In these samples, inflow of aluminum into a weld metal 40 formed was restricted to zero or a very small amount by virtue of the presence of the joining assist member 30, whereby a high-quality weld metal 40 was formed. Furthermore, since the degree of weld penetration into the bottom plate 20 was sufficiently high and the non-insertion portion of the joining assist member 30 was larger in area than the hole 11 of the top plate 10, full coming-off was prevented and high CTS was obtained in the cross tension test. Still further, in the sample No. D4 in which an adhesive was applied at a proper location, an effect of preventing electric corrosion at aluminum-steel interfaces was obtained, whereby reduction in CTS and TSS due to corrosion was suppressed and the CTS after corrosion and the TSS after corrosion were higher than in the sample of No. D3 in which no adhesive was applied.

### <Examples E>

In Examples E, a lap joint was used having a combination of a 4.0 mm-thick top plate 10 made of an aluminum alloy A7N01 and a 3.0 mm-thick bottom plate 20 made of 1,180 MPa-class high tensile strength steel. A 1.5 mm-height swell portion 21 was formed by drawing at a welding position in the bottom plate 20. This lap joint was joined by fixed-point arc welding of a prescribed time by a plasma arc welding method using a 1.2 mm-diameter JIS Z3321 YS309L stainless steel welding wire and using 99% Ar and 1% H₂ as a shielding gas and 100% Ar as a plasma gas.

This welding joint 1 was subjected to breaking tests according to JIS Z3136 "Test piece dimensions and test method of shearing test of resistance spot and projection welding joint" and JIS Z3137 "Cross tension test for resistance spot and projection welding joint." In the following, tensile strength of Z3136 was referred to as TSS and tensile strength of Z3137 was referred to as CTS. Acceptance criteria were TSS ≥ 10 kN and CTS ≥ 8 kN.

To obtain preferable performance values, but not indispensable, as in Examples A to D, the welding joint 1 was also subjected to JASO-CCT for 28 days and then subjected to the same breaking tests as described above to obtain TSS after corrosion and CTS after corrosion. Acceptance criteria for these preferable performance values were that they should be 80% or larger of respective values of the tests without corrosion.

In Table 5, Examples are denoted by Nos. E1 to E3.

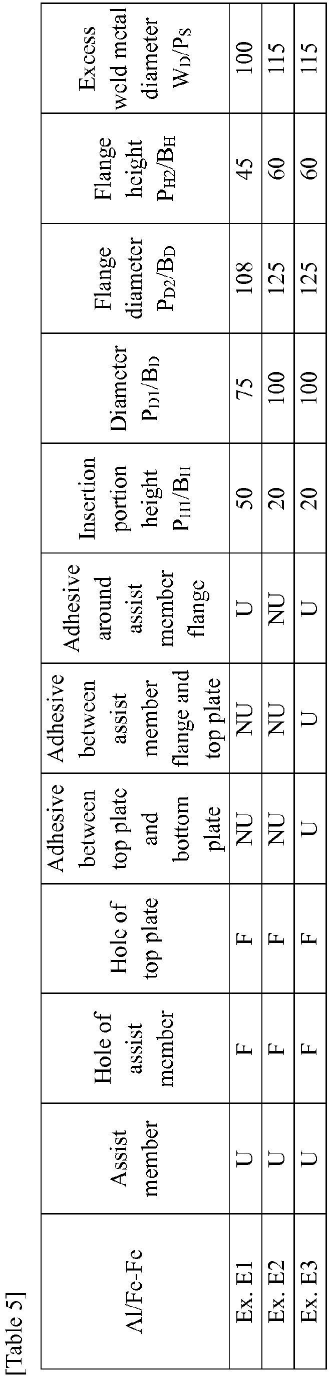

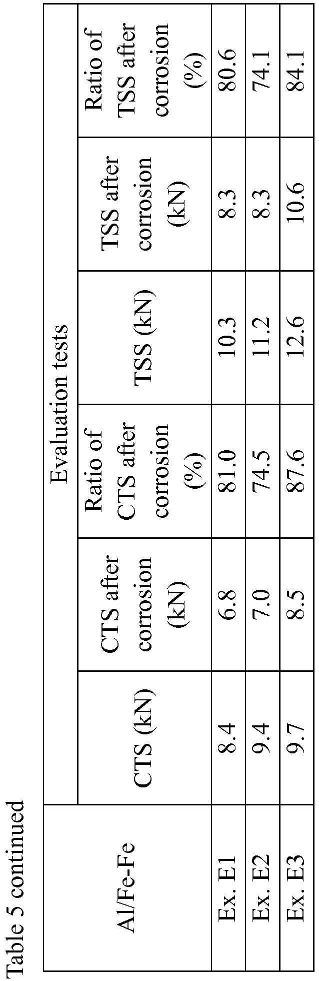

In Nos. E1 to E3, the joining assist member 30 through which an 8.0 mm-diameter hole was made was put on the top plate 10 through which a 10.0 mm-diameter hole was made and arc welding was performed from above the joining assist member 30. The hole was formed through the joining assist member 30 and the insertion portion 31 was formed so as to be inserted in the hole 11 of the top plate 10. The joining assist member 30 had a two-level shape. In these samples, inflow of aluminum into a weld metal 40 formed was restricted to zero or a very small amount by virtue of the presence of the joining assist member 30, whereby a high-quality weld metal was formed. Furthermore, since the degree of weld penetration into the bottom plate 20 was sufficiently high and the non-insertion portion 32 of the joining assist member 30 was larger in area than the hole 11 of the top plate 10, full coming-off was prevented and high CTS was obtained in the cross tension test. Still further, in the samples (Nos. E1 and E3) in which a normal temperature quick setting type two-liquid-mixing adhesive for metal was applied at a proper location(s), an effect of preventing electric corrosion at aluminum-steel interfaces was obtained, whereby reduction in CTS and TSS due to corrosion was suppressed and the CTS after corrosion and the TSS after corrosion were high. More specifically, it is seen that the CTS after corrosion and the TSS after corrosion of No. E3 in which the adhesive was applied were higher than those of No. E2.

The present application is based on Japanese Patent Application No. 2016-166838 filed on August 29, 2016, the disclosure of which is incorporated herein by reference.

### Description of Symbols

10: Top plate
11: Hole
20: Bottom plate
30: Joining assist member
31: Insertion portion
32: Non-insertion portion
33: Hollow portion
40: Weld metal
W: Melting portion
Wa: Excess weld metal

## Claims

1. An arc spot welding method for dissimilar material joining for joining a first plate made of an aluminum alloy or a magnesium alloy and a second plate made of steel, the method comprising:
a step of making a hole through the first plate;
a step of overlapping the first plate with the second plate;
a step of inserting a joining assist member made of steel into the hole formed in the first plate, the joining assist member having a stepped external shape including an insertion portion and a non-insertion portion and having a hollow portion formed to penetrate through the insertion portion and the non-insertion portion; and
a step of filling the hollow portion of the joining assist member with a weld metal and welding the second plate and the joining assist member by any method of the following (a) to (e):
(a) a gas-shielded arc welding method using, as a consumable electrode, a welding wire to provide the weld metal made of an iron alloy or a nickel alloy;
(b) a non-gas arc welding method using the welding wire as a consumable electrode;
(c) a gas tungsten arc welding method using the welding wire as a non-consumable electrode filler;
(d) a plasma arc welding method using the welding wire as a non-consumable electrode filler; and
(e) a coated arc welding method using, as a consumable electrode, a coated arc welding rod to provide the weld metal made of an iron alloy or a nickel alloy.

2. The arc spot welding method for dissimilar material joining according to claim 1, wherein the second plate has a swell portion formed by drawing, and the swell portion of the second plate is placed in the hole of the first plate in the overlapping step.

3. The arc spot welding method for dissimilar material joining according to claim 1, further comprising, before the overlapping step, a step of applying an adhesive to at least one of overlapped surfaces of the first plate and the second plate around the hole over its entire circumference.

4. The arc spot welding method for dissimilar material joining according to claim 1, wherein in the inserting step, an adhesive is applied to at least one of confronting surfaces between the non-insertion portion of the joining assist member and the first plate opposed to the non-insertion portion.

5. The arc spot welding method for dissimilar material joining according to claim 1, wherein in the inserting step or after the filling and welding step, an adhesive is applied to a boundary between the non-insertion portion of the joining assist member and a surface of the first plate.

6. The arc spot welding method for dissimilar material joining according to claim 1, wherein the insertion portion of the joining assist member has a height P_{H1} of 10% or larger and 100% or smaller of a thickness B_{H} of the first plate.

7. The arc spot welding method for dissimilar material joining according to claim 1, wherein the insertion portion of the joining assist member has a diameter P_{D1} of 80% or larger and 105% or smaller of a diameter B_{D} of the hole of the first plate.

8. The arc spot welding method for dissimilar material joining according to claim 1, wherein the non-insertion portion of the joining assist member has a diameter P_{D2} of 105% or larger of a diameter B_{D} of the hole of the first plate.

9. The arc spot welding method for dissimilar material joining according to claim 1, wherein the non-insertion portion of the joining assist member has a height P_{H2} of 50% or larger and 150% or smaller of a thickness B_{H} of the first plate.

10. The arc spot welding method for dissimilar material joining according to claim 1, wherein in the filling and welding step, an excess weld metal is formed on a surface of the joining assist member and the excess weld metal has a diameter W_{D} of 105% or larger of a diameter Ps of the hollow portion of the joining assist member.

11. A joining assist member to be used for the arc spot welding method for dissimilar material joining according to any one of claims 1 to 10, the joining assist member being made of steel, having a stepped external shape including an insertion portion and a non-insertion portion, and having a hollow portion formed to penetrate through the insertion portion and the non-insertion portion.

12. A dissimilar material welded joint comprising a first plate made of an aluminum alloy or a magnesium alloy and a second plate made of steel and arc-spot-welded to the first plate,
wherein the first plate has a hole that reaches an overlapped surface to the second plate,
the dissimilar material welded joint further comprises a joining assist member made of steel, the joining assist member having a stepped external shape including an insertion portion inserted in the hole formed in the first plate and a non-insertion portion, and having a hollow portion formed to penetrate through the insertion portion and the non-insertion portion, and
the hollow portion of the joining assist member is filled with a weld metal made of an iron alloy or a nickel alloy, and a melting portion is formed of the weld metal and a part of melted portions of the second plate and the joining assist member.

13. The dissimilar material welded joint according to claim 12, wherein a swell portion formed in the second plate is placed in the hole of the first plate.

14. The dissimilar material welded joint according to claim 12, comprising an adhesive applied to at least one of overlapped surfaces of the first plate and the second plate around the hole over its entire circumference.

15. The dissimilar material welded joint according to claim 12, comprising an adhesive applied to at least one of confronting surfaces between the non-insertion portion of the joining assist member and the first plate opposed to the non-insertion portion.

16. The dissimilar material welded joint according to claim 12, comprising an adhesive applied to a boundary between the non-insertion portion of the joining assist member and a surface of the first plate.

17. The dissimilar material welded joint according to claim 12, wherein the insertion portion of the joining assist member has a height P_{H1} of 10% or larger and 100% or smaller of a thickness B_{H} of the first plate.

18. The dissimilar material welded joint according to claim 12, wherein the insertion portion of the joining assist member has a diameter P_{D1} of 80% or larger and 105% or smaller of a diameter B_{D} of the hole of the first plate.

19. The dissimilar material welded joint according to claim 12, wherein the non-insertion portion of the joining assist member has a diameter P_{D2} of 105% or larger of a diameter B_{D} of the hole of the first plate.

20. The dissimilar material welded joint according to claim 12, wherein the non-insertion portion of the joining assist member has a height P_{H2} of 50% or larger and 150% or smaller of a sheet thickness B_{H} of the first plate.

21. The dissimilar material welded joint according to claim 12, wherein an excess weld metal is formed on a surface of the joining assist member and the excess weld metal has a diameter W_{D} of 105% or larger of a diameter Ps of the hollow portion of the joining assist member.
